(19) Europäisches Patentamt
European Patent Office
Office européen des brevets

(11) Veröffentlichungsnummer: **0 402 563 B1**

# (12) EUROPÄISCHE PATENTSCHRIFT

(45) Veröffentlichungstag der Patentschrift: **10.08.94**

(21) Anmeldenummer: **90100720.3**

(22) Anmeldetag: **15.01.90**

(51) Int. Cl.5: **C08F 222/38**, C08F 226/00, C08F 222/16, //(C08F222/38, 226:00),(C08F226/00,222:38, 222:16),(C08F222/16,226:00)

## (54) Wasserlösliche Copolymere, ein Verfahren zu ihrer Herstellung und ihre Verwendung als Fliessmittel in Feststoffsuspensionen.

(30) Priorität: **17.05.89 CH 1846/89**

(43) Veröffentlichungstag der Anmeldung:
**19.12.90 Patentblatt 90/51**

(45) Bekanntmachung des Hinweises auf die Patenterteilung:
**10.08.94 Patentblatt 94/32**

(84) Benannte Vertragsstaaten:
**AT BE CH DE DK ES FR GB IT LI LU NL SE**

(56) Entgegenhaltungen:
**GB-A- 970 115**
**GB-A- 1 031 444**
**US-A- 2 980 654**

(73) Patentinhaber: **Sika AG, vorm. Kaspar Winkler & Co.**
**Tüffenwies 16-22**
**CH-8048 Zürich (CH)**

(72) Erfinder: **Bürge, Theodor A.**
**Waldrütistrasse 3**
**CH-8954 Geroldswil (CH)**
Erfinder: **Schober, Irene, Dr.**
**Resedastrasse 20**
**CH-8008 Zürich (CH)**
Erfinder: **Huber, Anna**
**Obstgartenweg 2**
**CH-8135 Langnau a/A (CH)**
Erfinder: **Widmer, Jürg, Dr.**
**Winzerhalde 34**
**CH-8049 Zürich (CH)**
Erfinder: **Sulser, Ueli**
**Hönggerstrasse 12**
**CH-8102 Oberengstringen (CH)**

(74) Vertreter: **Blum, Rudolf Emil Ernst et al**
**c/o E. Blum & Co**
**Patentanwälte**
**Vorderberg 11**
**CH-8044 Zürich (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 402 563 B1

**Beschreibung**

Die vorliegende Erfindung betrifft wasserlösliche Copolymere, ein Verfahren zu ihrer Herstellung und ihre Verwendung als Fliessmittel in Feststoffsuspensionen.

Sie betrifft insbesondere neue wasserlösliche Copolymerisate von N-Vinylamiden mit monomeren Additionsprodukten von Aminen, Aminosäuren, Aminogruppen enthaltenden aromatischen Sulfonsäuren, Aminoalkoholen an Maleinsäureanhydrid sowie Maleinsäureester von Polyoxyalkylenglykolen oder deren Monoethern.

Bevorzugte Copolymerisate sind dabei jene, die durch radikalische Copolymerisation von N-Vinyllactamen mit den oben erwähnten Maleinsäureaddukten im molaren Verhältnis von 1:1 erhalten werden.

Die vorliegende Erfindung betrifft auch ein Verfahren zur Herstellung der Copolymeren und ihre Verwendung als Fliessmittel in wasserenthaltenden Feststoffsuspensionen. Es ist bekannt, dass N-Vinyllactame, zum Beispiel 1-Ethenyl-2-pyrrolidinon, in Lösung mit einer grossen Zahl von olefinische Gruppen enthaltenden Monomeren copolymerisiert werden kann. Viele dieser Produkte finden als wasserlösliche polymere Dispergiermittel Verwendung, und sind in zahlreichen Publikationen beschrieben, so zum Beispiel in US 3 116 264, wo ein Copolymer, mit Maleinsäureanhydrid und dessen durch Hydrolyse erhaltenes Alkalisalz und seine Verwendung als Fliessmittel für hydraulische Zementzusammensetzungen beschrieben wird.

In der DE-OS 35 29 095 werden Copolymere mit Acrylsäure hergestellt und als Baustoffhilfsmittel, insbesondere als Zusatz zu Fliessmörteln, verwendet.

Aus der GB-PS 2 202 526 sind ternäre Copolymere mit Acrylamid und Na-2-acrylamido-2-methylpropansulfonat, aus der EP-A-0 116 671 Copolymere mit Vinyl- und Allylsulfonsäuren bekannt.

Makromoleküle mit alternierenden Struktureinheiten, die sich von N-Vinyllactamen und Maleinsäurehalbamiden oder -halbestern, wie sie für die erfindungsgemässen Copolymeren charakteristisch sind, ableiten, wurden dagegen in der Fachliteratur noch nicht beschrieben.

Gegenstand der Erfindung sind daher lineare, wasserlösliche Copolymere,
welche aus Teilstruktureinheiten der Formel A

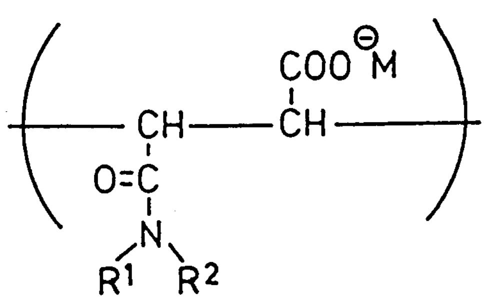

(A)

und/oder
aus Teilstruktureinheiten der Formel B

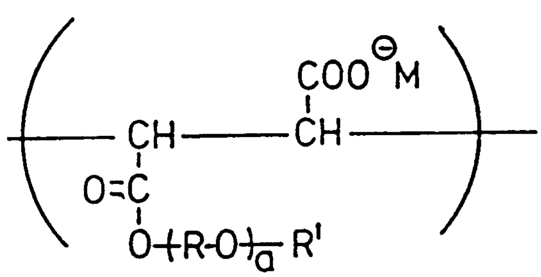

(B)

und
aus Teilstruktureinheiten der Formel C

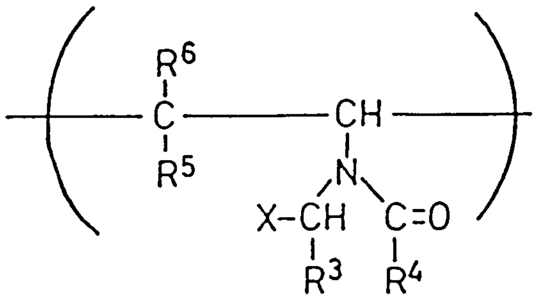

(C)

aufgebaut sind, worin

$R^1$ und $R^2$ unabhängig voneinander Wasserstoff, einen gegebenenfalls eine Alkalicarboxylat- oder Erdalkalicarboxylatgruppe aufweisenden $C_1$- bis $C_{20}$-Alkylrest, einen gegebenenfalls eine Sulfonsäuregruppe oder eine Alkalisulfonat- oder Erdalkalisulfonatgruppe aufweisenden aromatischen, aliphatischen oder cycloaliphatischen Rest, eine Hydroxyalkylgruppe, vorzugsweise eine Hydroxyethyl- oder Hydroxypropylgruppe, bedeuten oder zusammen, unter Einschluss des Stickstoffatomes, an welches sie gebunden sind, einen Morpholinring bilden;

M ein Wasserstoffion, ein mono- oder divalentes Metallion oder eine, gegebenenfalls substituierte Ammoniumgruppe;

R eine Alkylengruppe mit 2 bis 4 Kohlenstoffatomen,

R' ein Wasserstoffatom oder eine Alkylgruppe mit 1 bis 4 Kohlenstoffatomen,

a eine Zahl im Bereich von 1 bis 100,

$R^3$ und $R^4$ unabhängig voneinander Wasserstoff, einen $C_1$- bis $C_{12}$-Alkylrest, einen Phenylrest oder zusammen eine Di-, Tri- oder Tetramethylengruppe, die unter Einschluss des Restes der Formel

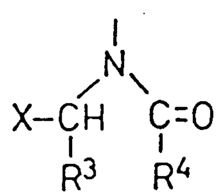

einen fünf-, sechs- oder siebengliedrigen Ring bilden;

$R^5$ und $R^6$ unabhängig voneinander Waserstoff, einen $C_1$- bis $C_{12}$-Alkylrest oder einen Phenylrest; und

X ein Wasserstoffatom, einen $C_1$- bis $C_4$-Alkylrest, eine Carboxylsäure- oder Alkalicarboxylatgruppe bedeuten,

mit der Massgabe, dass in einem Copolymer, das ausschliesslich aus der Formel B abgeleitete Teilstruktureinheiten der Formel $\overline{B}$

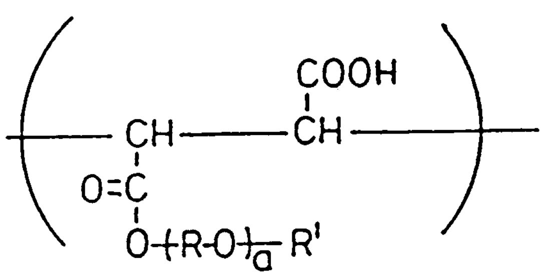

($\overline{B}$)

und Teilstruktureinheiten der Formel C enthält, die Reste $R^3$ und $R^4$ zusammen weder eine Di- noch eine Tri- oder eine Tetramethylengruppe bilden dürfen, sofern $R^5 = R^6 =$ Wasserstoff und $a > 1$ sind.

Erfindungsgemäss bevorzugt sind jene Copolymeren, die aus

p Teilstruktureinheiten, vorzugsweise von 3 bis 1000 der Formel (A) und

r Teilstruktureinheiten, vorzugsweise von 3 bis 1000, wobei $p \leqq r$, der Formel (C)

oder

q Teilstruktureinheiten, vorzugsweise von 3 bis 1000 der Formel (B) und
r Teilstruktureinheiten, vorzugsweise von 3 bis 1000, wobei q ≦ r, der Formel (C)
aufgebaut sind.

Als Beispiele für Monomere, die Struktureinheiten der Formel A liefern, seien genannt: Die Halbamide der Maleinsäure, hergestellt durch Reaktion von Maleinsäureanhydrid mit Glutaminsäure, Glycin oder Prolin, oder durch Reaktion von Maleinsäureanhydrid mit Sulfanilsäure, Aminotoluolsulfonsäure, Naphthylaminmonosulfonsäure oder Naphthylamindisulfonsäure, und die Halbamide, die durch Reaktion von Maleinsäureanhydrid mit Morpholin oder Aminoalkanolen erhalten werden.

Als Beispiele für Monomere, die Struktureinheiten der Formel B liefern, seien genannt: Die Halbester der Maleinsäure mit Polyethylenglykolen und deren Monomethylethern im Molgewichtsbereich von 550 bis 5000.

Als Beispiele für Monomere, die Struktureinheiten der Formel C liefern, seien genannt: N-Methyl-N-vinylacetamid, N-Vinylcaprolactam, 1-Ethenyl-2-pyrrolidon und 1-Ethenyl-2-pyrrolidon-5-carbonsäure.

Gegenstand der Erfindung ist auch ein Verfahren zur Herstellung dieser Copolymerisate, das dadurch gekennzeichnet ist, dass

a) 0 bis 60 mol % eines Monomeren der allgemeinen Formel 7

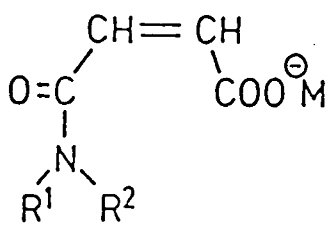

(7)

worin $R^1$, $R^2$ und M oben definiert sind, oder

b) 0 bis 60 mol % eines Monomeren der allgemeinen Formel 8

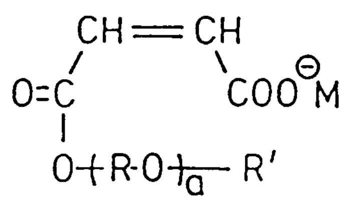

(8)

worin R, R', M und a oben definiert sind, mit

c) 40 bis 60 mol % eines Monomeren der allgemeinen Formel 9

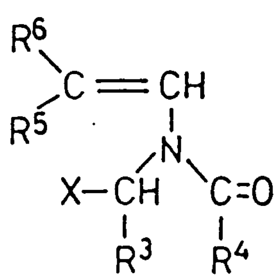

(9)

worin $R^3$, $R^4$, $R^5$, $R^6$ und X oben definiert sind,

und die Summe aus a) bis c) immer 100 mol % ergeben muss, radikalisch copolymerisiert werden.

Bevorzugtes Reaktionsmedium sind wässrige Lösungen der Monomeren. Diese werden derart erhalten, dass man zuerst zwei separate, je wenigstens ein Monomeres enthaltende wässrige Lösungen herstellt. Anstelle von Wasser eignet sich als Lösungsmittel auch ein Alkohol (z.B. Isopropanol), auch in Mischung mit Wasser.

Zur einen Lösung, die jeweils eines der Maleinsäureaddukte und einen Radikalinitiator, vorzugsweise Wasserstoffperoxid oder Natriumperoxid, enthält, wird eine, jeweils ein N-Vinyllactam und weitere Katalysatoren und Regler, vorzugsweise Ascorbinsäure, Natriummetabisulfit und Eisen-2-sulfat enthaltend, zugetropft und in der Regel 15 bis 45 Minuten bei Temperaturen von 20° bis 100°C, insbesondere von 20° bis 75°C solange gerührt, bis kein Peroxid mehr nachgewiesen werden kann, und anschliessend durch Zugabe von Lauge neutralisiert. Das Verfahren zeichnet sich durch eine hohe Ausbeute, eine niedrige Restmonomerkonzentration und eine überraschend hohe Polymerisationsgeschwindigkeit aus, obwohl in einer offenen Atmosphäre ohne Schutzgas gearbeitet wird. Es kann beispielsweise auch in gewöhnlichem Leitungswasser anstelle von deionisiertem Wasser gearbeitet werden.

Ein weiterer Gegenstand der Erfindung ist die Verwendung der erfindungsgemässen Produkte als Dispergiermittel in wässrigen Suspensionen von beispielsweise Tonen, Porzellanschlicker, Kreide, Talkum, Russe, Gesteinsmehle, Pigmente, Silikate und hydraulischen Bindemitteln.

Vorzugsweise werden die erfindungsgemässen Copolymeren jedoch als Fliessmittel oder Superverflüssiger für Wasser enthaltende Baustoffe eingesetzt, enthaltend hydraulische Bindemittel, wie Portlandzement, Tonerdezement, Hochofenzement, Puzzolan- oder Magnesiazement, und Zuschlagstoffe, wie Sand, Kies, Gesteinsmehl, Flugasche, Vermiculit, Blähglas, Blähtone, Schamotte, Leichtzuschläge und anorganische Fasern und Kusntstoffasern.

Fliessmittel auf der Basis von Polykondensaten, z.B. die Natrium- oder Calciumsalze sulfonierter Naphthalinformaldehydkondensate (US 3 537 869) oder Salze sulfonierter Melaminformaldehydkondensate (DE-PS 1 671 017) werden schon seit längerer Zeit als Superverflüssiger eingesetzt, um die Verarbeitbarkeit und das zeitabhängige Fliessverhalten von Zementmörteln und Beton zu verbessern. Diese konventionellen Fliessmittel verbessern zwar die Fliessfähigkeit solcher Mischungen, doch kann diese Fliessfähigkeit nicht für eine ausreichend lange Zeitspanne, praxisgerecht aufrechterhalten werden, so dass in bestimmten Zeitabständen zusätzliche Fliessmittelmengen nachdosiert werden müssen. Man hat deshalb in den vergangenen Jahren versucht, Copolymerisate auf Basis von Acrylsäure, die eine stärkere Fliesswirkung zeigen, als Superverflüssiger einzusetzen, doch besitzen diese Stoffe den Nachteil, dass sie in üblicher Dosierung dem Mörtel oder Beton zugesetzt, dessen Festigkeitsentwicklung zu stark verzögern, so dass sie sich bis heute auf dem Markt nicht durchzusetzen vermochten. Im Gegensatz dazu zeigen die an sich auch etwas verzögernden erfindungsgemässen Copolymerisate eine dermassen hohe und überraschend lange andauernde Fliesswirkung, dass sie auch noch bei niedriger Konzentrationen, die keine Abbindeverzögerung verursachen, wirkungsvoll eingesetzt werden können.

Völlig überraschend wurde auch gefunden, dass einige der erfindungsgemässen Copolymere eine ausgesprochene Affinität für Metallionen, insbesondere Erdalkalimetallionen, beispielsweise Calciumionen, aufweisen. Folglich können die erfindungsgemässen Copolymere auch als Komplexierungsmittel für die oben genannten Metallionen verwendet werden.

Spezielle Ausführungsarten der Erfindung sind in den abhängigen Ansprüchen beschrieben.

Die folgenden Beispiele dienen der näheren Erläuterung der Erfindung.

## Herstellungsbeispiele

### Allgemeine Bemerkungen

Die Synthesen der erfindungsgemässen Copolymeren werden so durchgeführt, dass man zuerst zwei separate, je wenigstens ein Monomeres enthaltende wässrige Lösungen herstellt. Zur Lösung 1, die jeweils eines der Maleinsäureaddukte $A_1$ bis $A_4$ und einen Peroxidkatalysator enthält, wird eine, jeweils eines der N-Vinyllactame $B_1$ bis $B_3$ und die Polymerisationsmodifikatoren (Kettenlängenregler) enthaltende wässrige Lösung 2 zugetropft und so lange bei erhöhter Temperatur und in einem pH-Bereich von pH = 4,5 - 7 gerührt bis kein Peroxid mehr nachgewiesen werden kann.

In Tabelle 1 sind die als Monomere in den Herstellungsbeispielen verwendeten Maleinsäureaddukte $A_1$ bis $A_4$, die comonomeren Vinyllactame $B_1$ bis $B_3$ und die daraus hergestellten Copolymeren in Matrixform zusammengefasst. Das Matrixelement $A_1B_1$ symbolisiert zum Beispiel eine Polymerstruktur, hergestellt durch alternierende radikalische Copolymerisation des Monomeren $A_1$ mit dem Comomeren $B_1$.

TABELLE 1: Copolymerisate aus Maleinsäureaddukten (A) und 1-Ethenyllactamen (B) gemäss den Herstellungsbeispielen 1 bis 7.

| A \ B | $B_1$ 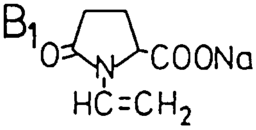 | $B_2$ 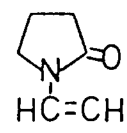 | $B_3$ 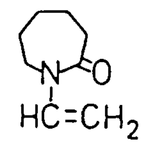 |
|---|---|---|---|
| $A_1$ 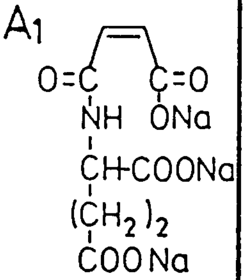 | $A_1B_1$ | $A_1B_2$ | |
| $A_2$ 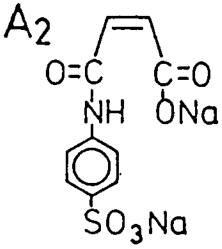 | $A_2B_1$ | $A_2B_2$ | $A_2B_3$ |
| $A_3$ 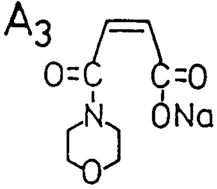 | | $A_3B_2$ | |
| $A_4$ 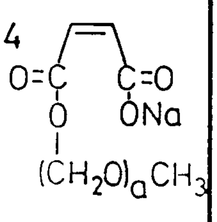 | | $A_4B_2$ | |

## Herstellungsbeispiel 1

Herstellung des Copolymeren $A_1B_1$ in wässriger Lösung.

Lösung 1

In einem Fünfhalskolben, versehen mit KPG-Rührer, Rückflusskühler, Tropftrichter, Pulvertrichter und Thermometer, werden 1200 g 10-% Natronlauge und 220 g (1,50 Mol) Glutaminsäure gegeben, wobei durch Kühlen die Temperatur auf 30 °C gehalten wird. Anschliessend werden innerhalb von 20 Minuten unter Rühren 142 g (1,45 Mol) Maleinsäureanhydrid und 116 g 50-% Natronlauge simultan so zugegeben, dass der pH-Wert zwischen 5,50 und 6,80 liegt, wobei durch Kühlen die Temperatur im Bereich von 30 bis 35 °C gehalten wird. Nach beendigter Zugabe wird noch während 15 Minuten nachgerührt und dann der Reihe nach 100 g deionisiertes Wasser, 10 g 50 %-Schwefelsäure, 25 g 33 %-Wasserstoffperoxid (0,24 Mol) und 0,20 g Eisen(II)sulfat•$7H_2O$ zugegeben.

Lösung 2

In einem separaten Rührgefäss werden 370 g deionisiertes Wasser, 5,6 g 50 %-Natronlauge, 4 g (0,02 Mol) Natriummetabisulfit, 4 g (0,02 Mol) Ascorbinsäure und 248 g (1,40 Mol) Natrium-1-ethenyl-2-pyrrolidon-5-carboxylat so lange gerührt, bis eine klare Lösung entstanden ist.

Durchführung der Copolymerisation

Zu der Lösung 1, die eine Temperatur von 18-20 °C aufweisen soll, wird nun innerhalb von 15 Minuten die Lösung 2 zugetropft, wobei durch Kühlen dafür gesorgt wird, dass die Temperatur des Reaktionsgemisches 50 °C nicht übersteigt. Nachdem Lösung 2 zugegeben ist, wird noch 20 Minuten bei 50 °C weitergerührt und dann die Reaktionslösung auf 20 °C abgekühlt und auf Peroxid geprüft, wobei eventuell noch vorhandene Reste durch Zugabe geringer Mengen von Natriummetabisulfit neutralisiert werden.

Abschliessend wird durch Zugabe von 50 %-Natronlauge ein pH-Wert von 7 bis 8 eingestellt.

| Spezifikationen: | |
|---|---|
| Klare, schwach gelbe Lösung | |
| Viskosität:<br>Feststoffgehalt<br>pH-Wert | 250 mPa•s (20 °C)<br>30 %<br>7-8 |

Herstellungsbeispiel 2

Herstellung des Copolymeren $A_1B_2$ in wässriger Lösung.

Losung 1 ist identisch mit der in Herstellungsbeispiel 1 beschriebenen Lösung 1.

Lösung 2

Zu 250 g deionisiertem Wasser werden der Reihe nach 5,6 g 50%-Natronlauge, 5 g (0,03 Mol) Natriummetabisulfit, 3 g (0,02 Mol) Ascorbinsäure und 150 g (1,35 Mol) 1-Ethenyl-2-pyrrolidinon gegeben und so lange gerührt, bis eine klare Lösung resultiert.

Durchführung der Copolymerisation

Die Copolymerisation erfolgt nach dem in Herstellungsbeispiel 1 beschriebenen Verfahren.

| Spezifikationen: | |
|---|---|
| Klare, schwach gelbe Lösung | |
| Feststoffgehalt<br>Viskosität<br>pH-Wert | 30 %<br>200 mPa•s (20 °C)<br>7-8 |

Herstellungsbeispiel 3

Herstellung des Copolymeren $A_2B_1$ in wässriger Lösung.

Lösung 1

In einem Fünfhalskolben, versehen mit KPG-Rührer, Rückflusskühler, Tropftrichter, Pulvertrichter und Thermometer, werden unter Rühren 576 g deionisiertes Wasser, 116 g 50 %-Natronlauge (1,45 Mol) und 250 g (1,44 Mol) Sulfanilsäure vorgelegt. Nach Abkühlen auf 30 °C werden innerhalb von 20 Minuten unter kräftigem Rühren 142 g (1,45 Mol) Maleinsäureanhydrid und 116 g 50 %-Natronlauge simultan so zugegeben, dass der pH-Wert der Reaktionsmischung von anfänglich ca. 5,5 auf 6,7 bis 6,9 nach beendigter Zugabe ansteigt, wobei die Temperatur im Bereich von 30 °C bis 35 °C gehalten wird. Anschliessend wird noch während 20 Minuten nachgerührt, worauf der Reihe nach 450g deionisiertes Wasser, 10 g 50 %-Schwefelsäure, 24 g 33 %-Wasserstoffperoxid und 0,20 g Eisen(II)sulfat•$7H_2O$ zugegeben werden.

Lösung 2

Ist mit der in Herstellungsbeispiel 1 beschriebenen Lösung 2 identisch.

Durchführung der Copolymerisation

Die Copolymerisation erfolgt durch Zutropfen von Lösung 2 zur Lösung 1 nach dem in Herstellungsbeispiel 1 angegebenen Verfahren.

| Spezifikationen: | |
|---|---|
| Klare, braune Lösung | |
| Feststoffgehalt<br>Viskosität<br>pH-Wert | 30 %<br>220 mPa•s (20 °C)<br>7-8 |

Herstellungsbeispiel 4

Herstellung des Copolymeren $A_2B_2$ in wässriger Lösung.

Lösung 1, enthaltend das Monomer $A_2$, ist mit der im Herstellungsbeispiel 3 beschriebenen Lösung 1 identisch.

Lösung 2, enthaltend das Comonomer $B_2$, ist mit der bereits im Herstellungsbeispiel 2 beschriebnene Lösung 2 identisch.

Durchführung der Copolymerisation

Die Copolymerisation erfolgt durch Zutropfen von Lösung 2 zur Lösung 1 nach der im Herstellungsbeispiel 1 angegebenen Vorschrift.

| Spezifikationen des Reaktionsproduktes: | |
|---|---|
| Klare, dunkelbraune Lösung | |
| Feststoffgehalt<br>Viskosität<br>pH-Wert | 30 %<br>200 mPa•s (20 °C)<br>7-8 |

Herstellungsbeispiel 5

Herstellung des Copolymeren $A_2B_3$ in wässriger Lösung.

Lösung 1, das Monomere $A_2$ enthaltend, ist mit der nach Herstellungsbeispiel 3 erhaltenen Lösung 1 identisch.

Lösung 2, das Comonomere $B_3$ enthaltend.

In eine Mischung von 250 g deionisiertem Wasser und 250 g Isopropanol werden nacheinander 5,6 g 50 %-Natronlauge, 5g (0,03 Mol) Natriummetabisulfit, 3g (0,02 Mol) Ascorbinsäure und 202 g (1,45 Mol) 1-Ethenylcaprolactam eingetragen und dann so lange gerührt, bis eine klare Lösung entsteht.

Durchführung der Copolymerisation

Zu der Lösung 1, die eine Temperatur von 20 °C aufweisen soll, wird die Lösung 2 innerhalb von 15 Minuten dergestalt zugetropft, dass eine Reaktionstemperatur von 55 °C nicht überschritten wird. Nach beendigter Zugabe wird noch während 30 Minuten bei 55 °C weitergerührt und dann auf 20 °C abgekühlt. Die peroxidfreie Reaktionslösung wird durch Zugabe von 50 %-Natronlauge auf einen pH-Wert von 7 bis 8 eingestellt und dann am Rotationsverdampfer unter Wasserstrahlvakuum zur Trockne eingedampft. Es werden 670 g eines grünbraunen Rückstandes erhalten, der in 1500 g deionisiertem Wasser aufgelöst wird.

| Spezifikationen der Polymerlösung: | |
|---|---|
| Klare, dunkelbraune Lösung | |
| Feststoffgehalt | 30 % |
| Viskosität | 220 mPa•s (20 °C) |
| pH-Wert | 7-8 |

Herstellungsbeispiel 6

Herstellung de Copolymeren $A_3B_2$ in wässriger Lösung.

Lösung 1

In einem Fünfhalskolben, versehen mit KPG-Rührer, Rückflusskühler, Tropftrichter, Pulvertrichter und Thermometer, werden 600 g deionisiertes Wasser und 129 g (1,48 Mol) Morpholin vorgelegt und dann innerhalb von 20 Minuten unter Rühren 142 g (1,45 Mol) Maleinsäureanhydrid und 116 g 50 %-Natronlauge simultan so zugegeben, dass der pH-Wert von 6,5 nicht überschritten wird, wobei durch Kühlen eine Reaktionstemperatur von 30 °C gehalten wird. Nach beendigter Zugabe wird noch während 20 Minuten nachgerührt. Anschliessend werden der Reihe nach unter Rühren 425 g deionisiertes Wasser, 10 g 50 %-Schwefelsäure, 24 g 33 %-Wasserstoffperoxid und 0,20 g Eisen(II)-sulfatheptahydrat zugegeben.

Lösung 2, das Comonomere $B_2$ enthalten, ist identisch mit der gemäss Herstellungsbeispiel 2 hergestellten Lösung 2.

Durchführung der Copolymerisation

Die Copolymerisation erfolgt durch Zutropfen von Lösung 2 zur Lösung 1 gemäss der im Herstellungsbeispiel 1 angegebenen Vorschrift.

| Spezifikationen der Polymerlösung: | |
|---|---|
| Klare, schwach gelbe Lösung | |
| Feststoffgehalt | 30 % |
| Viskosität | 180 mPa•s (20 °C) |
| pH-Wert | 7-8 |

Herstellungsbeispiel 7

Herstellung des Copolymeren $A_4B_2$ in wässriger Lösung.

Lösung 1

Eine Mischung, bestehend aus 800 g (1,46 Mol) Polyethylenglykolmonomethylether vom mittleren Molgewicht 550 und 142 g (1,45 Mol) Maleinsäureanhydrid, wird während 3 Stunden vorsichtig auf 130-140 °C erhitzt. Nach dem Abkühlen auf 30 °C werden unter kräftigem Rühren innerhalb von 30 Minuten 112 g 50 %-Natronlauge, gelöst in 2180 g deionisiertem Wasser, zugegeben, wobei durch Kühlen die Temperatur unterhalb 30 °C gehalten wird. Anschliessend wird noch während 15 Minuten nachgerührt, worauf der Reihe nach 10 g 50 %-Schwefeläsure, 25 g 33 %-Wasserstoffperoxid und 0,20 g Eisen(II)-sulfat•$7H_2O$ zugegeben werden.

Lösung 2, das Comonomere $B_2$ enthaltend, ist mit der im Hestellungsbeispiel 2 beschriebenen Lösung 2 identisch.

Durchführung der Copolymerisation

Zu der Lösung 1 wird die Lösung 2 innerhalb von 30 Minuten so zugetropft, dass eine Reaktionstemperatur von 60 °C aufrecht erhalten wird. Anschliessend wird noch so lange bei 60 °C weitergerührt, bis kein Wasserstoffperoxid mehr nachgewiesen werden kann und dann auf 20 °C abgekühlt, worauf durch vorsichtige Zugabe von verdünnter Natronlauge unter kräftigem Rühren ein pH-Wert von 7 bis 8 eingestellt wird.

| Spezifikationen der Polymerlösung: | |
|---|---|
| Klare, schwach gelbe Lösung | |
| Feststoffgehalt<br>Viskosität | 30 %<br>310 mPa•s (20 °C) |

Vergleichsbeispiele

Vergleichsbeispiel 1

Herstellung des Vergleichspolymers VP1 durch Copolymerisation von Maleinsäure mit 1-Ethenyl-2-pyrrolidinon im Molverhältnis 1:1 in wässriger Lösung.

Lösung 1

In einem Rührkolben, versehen mit KPG-Rührer, Rückflusskühler, Tropftrichter und Thermometer, werden 320 g deionisiertes Wasser und 225 g 50%-Natronlauge vorgelegt und dann unter kräftigem Rühren portionenweise 142 g (1,45 Mol) Maleinsäureanhydrid zugegeben. Die klare Lösung wird auf 20 °C abgekühlt und dann der Reihe nach mit 10 g 50%-Schwefelsäure, 24 g 33 %-Wasserstoffperoxid und 0,20 g Eisen(II)sulfat•$7H_2O$ versetzt.

Lösung 2, das 1-Ethenyl-2-pyrrolidinon enthaltend, wird nach Herstellungsbeispiel 2 hergestellt.

Durchführung der Copolymerisation

Zu der Lösung 1 wird unter Rühren innerhalb von 15 Minuten die Lösung 2 zugetropft, wobei durch Kühlen die Temperatur im Bereich zwischen 50 ° und 55 °C gehalten wird. Nachdem Lösung 2 zugegeben ist, wird noch 20 Minuten bei 55 °C gerührt und dann die Lösung auf 20 °C abgekühlt. Nachdem allfällig vorhandene Reste von Peroxid durch zugabe von Natriummetabisulfit neutralisiert worden sind, wird durch vorsichtige Zugabe von 50 %-Natronlauge ein pH-Wert von 7 bis 8 eingestellt.

| Spezifikationen der Polymerlösung: | |
|---|---|
| Klare, schwach gelbe Lösung | |
| Feststoffgehalt<br>Viskosität | 30 %<br>210 mPa•s (20 °C) |

Vergleichsbeispiel 2

Herstellung des Vergleichspolymers VP2 durch Copolymerisation von Maleinsäure-monosulfanilid (Monomer $A_2$, Tabelle 1) mit Acrylsäure und Vinylacetat im Molverhältnis 0,41 : 1 : 0,58 in wässriger Lösung.

Lösung 1

In einem 1 Liter-Rührkolben, versehen mit KPG-Rührer, Thermometer, Rückflusskühler, Tropftrichter und Pulvertrichter, werden unter Rühren 168 g deionisiertes Wasser, 34 g 50 %-Natronlauge und 73 g (0,43 Mol) Sulfanilsäure vorgelegt.

Nach Abkühlen der Lösung auf 30 °C werden innerhalb von 20 Minuten unter kräftigem Rühren 44 g (0,45 Mol) Maleinsäureanhydrid und 34 g (0,43 Mol) 50 %-Natronlauge simultan so zugegebn, dass der pH-Wert der Reaktionsmischung von anfänglich 5,5 auf ca. 6,7 bis 6,9 nach beendigter Zugabe ansteigt, wobei die Reaktionstemperatur im Bereich von 30 °C bis 35 °C gehalten wird. Anschliessend wird noch während 20 Minuten nachgerührt und dann die Lösung der Reihe nach mit 5 g 50 %-Schwefeläsure, 6 g Eisen(II)-sulfat•$7H_2O$ (10 %-Lösung), 50 g (0,58 Mol) Vinylacetat in 30 g Isopropanol versetzt.

Lösung 2

Es werden 72 g (1 Mol) Acrylsäure in 80 g deionisiertem Wasser gelöst.

Lösung 3

Es werden 10 g 33 %-Wasserstoffperoxid mit 25 g deionisiertem Wasser gemischt.

Durchführung der Copolymerisation

Zu der auf 65 °C erwärmten Lösung 1 werden unter Rückfluss und Rühren die Lösung 2 und die Lösung 3 simultan innerhalb von 50 Minuten zugetropft, wobei die Rückflusstemperatur auf 70 °C ansteigt. Anschliessend wird das Reaktionsgemisch noch 30 Minuten bei 70 °C gehalten und dann mit einem kräftigen Stickstoffstrom das überschüssige Vinylacetat und das Isopropanol ausgeblasen, wobei total 26 g Destillat in die kühlfalle übergehen. Anschliessend wird das Reaktionsgemisch auf 20 °C abgekühlt und mit 80 g 50 %-Natronlauge auf einen pH-Wert von 6,5 - 7,0 gestellt.

| Spezifikationen: | |
|---|---|
| Feststoffgehalt<br>Viskosität | 39,5 %<br>210 mPa•s (20 °C) |

Vergleichsbeispiel 3

SOKOLAN CP10®, BASF, im folgenden als Vergleichspolymer VP3 bezeichnet.

Im Handel erhältliches Dispergiermittel auf Basis eines Poly-Natriumacrylates vom Molgewicht 4000. (SOKOLAN CP10®, BASF).

Vergleichsbeispiel 4

Vergleichspolymer VP 4

Im Handel erhältliches Dispergiermittel (Cormix 2000®) für hydraulische Zementmassen auf Basis einer wässrigen Lösung eines Copolymerisates von Acrylsäure.

Vergleichsbeispiel 5

MELMENT-F10®, im folgenden als Vergleichspolymer VP5 bezeichnet. Ein im Handel erhältliches Dispergiermittel für hydraulische Zementmassen auf Basis des Natriumsalzes eines sulfonierten Melamin-Formaldehydpolykondensates.

Vergleichsbeispiel 6

LOMAR-D®, im folgenden als Vergleichspolymer VP6 bezeichnet.

Ein im Handel erhältliches Dispergiermittel für hydraulische Zementmassen auf Basis des Natriumsalzes eines sulfonierten Naphthalin-Formaldehydpolykondensates.

Untersuchungsbeispiele

In den folgenden Beispielen wird die erhöhte Wirksamkeit der erfindungsgemässen Polymeren als Dispergiermittel bzw. Fliessmittel in unterschiedlichen Feststoffsuspensionen im Vergleich zum Stand der Technik (Vergleichsbeispiele 1 bis 6) nachgewiesen.

Beispiel 1

Rotationsviskosimetrische Bestimmung der Dispergierwirkung einiger erfindungsgemässer Copolymere.

Ausführung

Der zu dispergierende Feststoff (Calciumcarbonat oder Zement) wurde in einen Hobartmischer (Kesselvolumen ca. 4 Liter) eingewogen. Unter rühren auf Stufe 1 wurde eine verdünnte wässrige Lösung des zu untersuchenden Zusatzmittels zugegeben und gleichzeitig eine Stopuhr gestartet. Jeweils 10 und 15 Minuten nach Zugabe der Lösung wurde das Drehmoment am Rotationsviskosimeter abgelesen, das der Viskosität der Suspension direkt proportional ist.

Die Fliesswirkung eines Dispergiermittels ist umso besser, je niedriger der als Drehmoment gemessene Scherwiderstand ist, der durch die Suspension auf das Messpaddel ausgeübt wird. Als Viskosimeter diente ein Viscocorder, Modell Nr. 8018 der Firma Brabender.

In Tabelle 2 sind die Resultate, die mit verschiedenen Zusatzmitteln in Calciumcarbonatschlämmen konstanten Wassergehaltes erhalten wurden, zusammengefasst.

| Versuchsbedingungen | |
|---|---|
| $CaCO_3$: | Marke Omya Rot-Etikette |
| Feststoffgehalt: | 70 % $CaCO_3$ in Wasser |
| Dosierung des Zusatzmittels: | in % Festpolymer bezogen auf $CaCO_3$ |
| Scherkopf: | Doppelankerpaddel |
| Rotationsgeschwindigkeit: | 120 U/min. |

Die Ergebnisse demonstrieren auf eindrückliche Weise die überraschend hohe Dispergierfähigkeit der erfindungsgemässen Zusatzmittel im Vergleich zu VP3 (SOKOLAN CP10®), einem anerkanntermassen guten Dispergiermittel. Eine vergleichsweise schlechte Wirkung zeigen die hauptsächlich als Fliessmittel für hydraulische Zementmassen eingesetzten Polykondensate VP5 und VP6.

TABELLE 2

| Dispergierwirkung verschiedener Zusatzmittel in einer $CaCO_3$-Schlämme. | | | |
|---|---|---|---|
| Zusatzmittel | Dosierung % Feststoff | Scherwiderstand [g•cm] | |
| | | nach 10′ | nach 15′ |
| Ohne | -- | 310 | 330 |
| $A_1 B_1$ | 0,02<br>0,01 | 50<br>220 | 50<br>260 |
| $A_1 B_2$ | 0,02<br>0,01 | 45<br>220 | 50<br>260 |
| $A_2 B_1$ | 0,02<br>0,01 | 35<br>190 | 40<br>240 |
| $A_2 B_2$ | 0,02<br>0,01 | 40<br>210 | 40<br>250 |
| VP1 | 0,04<br>0,02<br>0,01 | 30<br>120<br>260 | 30<br>120<br>280 |
| VP2 | 0,04<br>0,02<br>0,01 | 10<br>140<br>270 | 10<br>170<br>300 |
| VP3 | 0,04<br>0,02<br>0,01 | 10<br>130<br>265 | 20<br>160<br>290 |
| VP5 | 0,04<br>0,02<br>0,01 | 30<br>230<br>300 | 40<br>260<br>310 |
| VP6 | 0,04<br>0,02<br>0,01 | 50<br>200<br>300 | 60<br>240<br>320 |

Tabelle 3 gibt eine Uebersicht über die Dispergierwirkung derselben Zusatzmittel in einer Zementschlämme konstanten Wassergehaltes.

| Versuchsbedingungen | |
|---|---|
| Zement:<br>Wasserzementwert:<br>Dosierung des Zusatzmittels:<br>Scherkopf:<br>Rotationsgeschwindigkeit: | Portlandzement 35 F<br>W/Z = 0,390<br>Gew.-% Festpolymer, bezogen auf Zement<br>Zementpaddel<br>120 U/min. |

Auch hier zeigt sich in überzeugender Weise die hohe Wirksamkeit der erfindungsgemässen Polymeren im Vergleich zu den herkömmlichen Zusatzmitteln, die in doppelt so hoher Dosierung (0,4 %) eingesetzt werden müssen, um einen ähnlich tiefen Scherwiderstand im Bereich 180-200 g •cm zu erzielen.

TABELLE 3

| Dispergierwirkung verschiedener Zusatzmittel in einer Suspension von Portlandzement | | | |
|---|---|---|---|
| Zusatzmittel | Dosierung % Feststoff | Scherwiderstand [g•cm] | |
| | | nach 10′ | nach 15′ |
| Ohne | -- | 520 | 500 |
| $A_1B_1$ | 0,2<br>0,1 | 220<br>260 | 210<br>260 |
| $A_1B_2$ | 0,2<br>0,1 | 220<br>260 | 220<br>270 |
| $A_2B_1$ | 0,2<br>0,1 | 195<br>250 | 200<br>250 |
| $A_2B_2$ | 0,2<br>0,1 | 190<br>250 | 190<br>250 |
| VP1 | 0,4<br>0,2<br>0,1 | 190<br>290<br>380 | 190<br>290<br>390 |
| VP2 | 0,4<br>0,2<br>0,1 | 180<br>280<br>350 | 170<br>260<br>350 |
| VP3 | 0,4<br>0,2<br>0,1 | 210<br>280<br>360 | 220<br>260<br>350 |
| VP5 | 0,4<br>0,2<br>0,1 | 210<br>290<br>350 | 190<br>290<br>340 |
| VP6 | 0,4<br>0,2<br>0,1 | 210<br>250<br>370 | 210<br>250<br>380 |

Wie die nachfolgenden Beispiele zeigen, wird der in den Tabellen 2 und 3 gezeigte Befund auch durch Versuche bestätigt, bei denen die erfindungsgemässen Polymeren als Fliessmittel in Zementmörtel und Beton eingesetzt werden.

Beispiel 2

Untersuchung und Vergleich der Fliesswirkung von erfindungsgemässen Copolymeren und Vergleichspolymeren in Zementmörtel und Beton.

Allgemeines

Frischbeton ist ein Gemenge, bestehend aus Zement, dem Anmachwasser und den Zuschlagstoffen Sand und Kies bestimmter Korngrössenverteilung.

Im Unterschied zum Beton enthält ein Zementmörtel keine groben Zuschlagstoffe (Kies), weist aber oft einen höheren Zementgehalt auf.

Ein Beton durchläuft nach dem Mischen verschiedene Entwicklungszustände vom Frischbeton bis zum Festbeton. Diese Zustände können zum Teil durch Zusatzmittel beeinflusst werden.

Betonzusätze werden dem Frischbeton oder -Mörtel - meistens gelöst im Anmachwasser - zugegeben, um dessen Verarbeitbarkeit und Endeigenschaften zu beeinflussen. Je nach der Zweckbestimmung eines Bauwerke oder Bauteiles und den gestellten Anforderungen müssen die Betoneigenschaften vom Ingenieur festgelegt werden. Die wichtigsten Eigenschaften sind beim Frischbeton die Verarbeitbarkeit, der innere

Zusammenhalt und seine Konsistenz, beim Festbeton die Zug- und Druckfestigkeit, Frostbeständigkeit, Frosttausalzbeständigkeit, Wasserdichtigkeit, Abriebfestigkeit und die chemische Beständigkeit.

Alle diese Eigenschaften sind weitgehend und entscheidend vom Wasserzementwert (Wasserzementfaktor), dem wichtigsten Merkmal einer Betonmischung, abhängig. Der Wasserzementwert (w)

$$w = \frac{W}{Z}$$

ergibt sich aus dem Mengenverhältnis zwischen Wasser (W) und Zement (Z) im frisch angemachten Beton. Mit zunehmendem Wassergehalt wächst der Wasserzementwert und mit zunehmendem Zementgehalt wird er kleiner. Ein kleiner Wasserzementwert gibt in jeder Hinsicht bessere Eigenschaften des Festbetons oder Festmörtels.

Demgegenüber ergibt ein höherer Wasserzementwert, bei sonst gleichbleibender Zusammensetzung, aber eine bessere Verarbeitbarkeit des Frischbetons, wobei diese als eine Kombination verschiedener Eigenschaften verstanden werden muss. Die Ueberführung des Frischbetons vom Betonmischer in die Schalung und die anschliessende Verdichtung in der Schalung bedarf eines beträchtlichen Aufwandes an Arbeit und Arbeitsüberwachung, wobei, je nach Verarbeitbarkeit, bedeutende Kostenunterschiede entstehen können. Um Arbeitsaufwand und Kosten zu reduzieren, kann man die Betonmischung flüssiger machen, indem man mehr Anmachwasser zugibt und dadurch den Wasserzementwert vergrössert. Da dies aber immer eine Festigkeitseinbusse des ausgehärteten Betons zur Folge hat, hat man in den letzten Jahren vermehrt sogenannte Fliessmittel (auch Superverflüssiger oder Hochleistungsverflüssiger genannt) eingesetzt, die es erlauben, die Konsistenz einer Betonmischung bei gleichbleibendem Wasserzementwert zu verbessern.

Die Konsistenz des Frischbetons oder Frischmörtels, also die Beweglichkeit oder Viskosität der frischen Mischung, gilt als das wichtigste Merkmal der Verarbeitbarkeit. Zur Messung der Konsistenz von Beton und Mörtel ist vor allem das Ausbreitmass in Gebrauch. Oft kommt aber zusätzlich auch der Slumptest (Setzungsmass) nach ASTM C143 zur Anwendung.

Zur Bestimmung des Ausbreitmasses wird auf einem zweiteiligen Spezialtisch 70 x 70 cm der Beton in eine spezielle Blechform eingebracht und durch Abziehen der Form ein kegelstumpfförmiger Betonkörper erstellt. Die Tischfläche wird nun auf der einen Seite um 4 cm angehoben und fallengelassen. Dieser Vorgang wird 15-mal durchgeführt, wobei der Beton auseinanderfliesst. Als Ausbreitmass gilt der mittlere Durchmesser des sich bildenden Kuchens.

In genau gleicher Weise, nur mit kleineren Abmessungen von Kegelform und Ausbreittisch wird das Ausbreitmass von Zementmörteln bestimmt. Abmessungen des Konus; oberer Durchmesser 70 mm, unterer Durchmesser 100 mm, Höhe 60 mm, Ausbreittisch 300 mm.

Slumptest

In einem kegelstumpfförmigen Blechrohr mit bestimmten Abmessungen wird Beton in drei Schichten eingebracht und mit 25 Stössen mit einem Eisenstab verdichtet. Der Beton wird oben eben abgestreift, worauf man die Form senkrecht wegzieht. Der Betonkörper sinkt selbständig ein. S entspricht dem anzugebenden Setzungsmass (slump). Der Slumptest eignet sich nicht zur Messung der Mörtelkonsistenz.

Um erhaltene Messwerte zu vergleichen und in bezug zur Konsistenz zu setzen, kann der Frischbeton bzw. Frischmörtel (siehe DIN 18555, Teil 2) in Konsistenzbereiche eingestellt werden:

Konsistenzbereiche von Frischmörteln:

| Konsistenzbereich | Ausbreitmass in mm |
|---|---|
| $K_M$ 1 steif | < 140 |
| $K_M$ 2 plastisch | 140 bis 200 |
| $K_M$ 3 weich | > 200 |

Der Konsistenzbereich $K_M3$ umfasst nicht nur weiche, sondern auch fliessfähige Mörtel ≧ 230 mm, wie sie etwa zur Herstellung von selbstnivellierenden Estrichen eingesetzt werden.

Konsistenzbereiche von Frischbeton:

| Bezeichnung | Ausbreitmass (cm) | Slump (cm) |
|---|---|---|
| K1 steif | < 30 | < 1 |
| K2 plastisch | 30 bis 40 | 1 bis 9 |
| K3 weich | 41 bis 50 | 10 bis 15 |
| K4 flüssig | ≧ 51 | ≧ 16 |

Fliessmittel, wie sie z.B. in den nachfolgenden Untersuchungsbeispielen zur Anwendung kommen, werden dann eingesetzt, wenn ganz bestimmte Bauaufgaben ausgeführt werden müssen.

Fliessbeton wird eingesetzt, wenn hohe Einbringleistungen von 50 bis 100 $m^3$/Stunde erwünscht sind oder aus betontechnischen Gründen, wenn Form und Bewehrung eines Bauteils eine Verdichtung des Betons mittels Rüttelung nicht zulassen. Es können aber auch Betone der Konsistenzen K2 und K3 aus einem Beton der Konsistenz K1 durch Zugabe von Fliessmitteln hergestellt werden, wenn erhöhte mechanische Festigkeiten bei gleichbleibender Verarbeitbarkeit erzielt werden sollen.

Die Wirkung ist bei gegebenem Frischbeton abhängig von der Dosierung, wobei Zugaben (in gelöster Form) von 0,2 bis 1,5 % Feststoff, bezogen auf das Zementgewicht, üblich sind.

In ganz besonderem Masse ist die Wirkung aber auch abhängig von der chemischen Struktur des dem Fliessmittel zugrundeliegenden Polymeren.

Mit dem Ziel, die erhöhte Wirksamkeit der nach den Hestellungsbeispielen 1 bis 7 hergestellten Fliessmittel im Vergleich zum Stand der Technik (Vergleichsbeispiele 1 bis 6) nachzuweisen, wurde das Fliessverhalten von diese Fliessmittel enthaltenden Mörtel- und Betonmischungen in Anlehnung an DIN 18555, Teil 1 bzw. in Anlehnung an DIN 1048, Teil 1 und an ASTM C143 gemessen.

Zusammensetzung und Herstellung der Versuchsmörtel

Tabelle 4

| Zusammensetzung der Versuchsmörtel | |
|---|---|
| Komponenten | Menge |
| Portlandzement 35 F | 1 kg |
| Rheinsand bis 1 mm | 1 kg |
| Rheinsand 1 bis 3 mm | 1 kg |
| Rheinsand 3 bis 5 mm | 1 kg |
| Anmachwasser | variabel, je nach Wasserzementwert |
| Fliessmittel | variabel, gelöst im Anmachwasser |

Herstellung

In einem Hobartmischer wurde Zement und Sand 1 Minute trocken vorgemischt und dann bei laufendem Rührwerk das Anmachwasser und, eventuell darin gelöst, das Fliessmittel innerhalb 15 bis 30 Sekunden zugegeben und dann noch eine Minute auf Stufe 1 (ca. 140 U/min.) gemischt. Anschliessend wurde das Rührwerk abgestellt, die Mischung mit einer Kelle aufgerührt und dann noch 2 Minuten auf Stufe 1 weitergemischt. Danach wurde das Ausbreitmass gemessen.

Zusammensetzung und Herstellung der Versuchsbetone

Tabelle 5

| Zusammensetzung der Betonmischungen | |
|---|---|
| Komponenten | Menge |
| Netstalfiller (Kalkfiller) | 1,5 kg |
| Rheinsand Epple bis 1,2 mm | 9,5 kg |
| Rheinsand Epple 1,2 bis 4 mm | 8,0 kg |
| Rheinsand Epple 4 bis 8 mm | 4,5 kg |
| Grubenkies * 8 bis 16 mm | 11,5 kg |
| Grubenkies * 16 bis 32 mm | 15,0 kg |
| Portlandzement: | 7,5 kg |
| Anmachwasser | variabel, je nach Wasserzementwert |
| Fliessmittel | variabel, gelöst im Anmachwasser |

* gewaschen und getrocknet

Herstellung

In einem 50 l-Betonzwangsmischer wurde der Zement mit den Zuschlagstoffen zuerst 15 Sekunden trocken vorgemischt und dann das Anmachwasser oder das im Anmachwasser verteilte Fliessmittel langsam unter Rühren während 15-20 Sekunden zugegeben. Anschliessend wurde noch 60 Sekunden nass gemischt und dann ein Teil der Mischung sofort in den Blechkonus zur Bestimmung des Ausbreitmasses bzw. des Slump eingefüllt.

Im Anschluss an die Messung des Ausbreitmasses wurden Prüfkörper mit 12 x 12 cm Kantenlänge hergestellt und die Druckfestigkeiten nach 1, 7 und 28 Tagen in Anlehnung an DIN 1048, Teil 1 bestimmt. Die Bestimmung des Abbindebeginns erfolgte in Anlehnung an ASTM C403.

Untersuchungsbeispiel 2a

Es wurde die zeitliche Abnahme des Ausbreitmasses, von gemäss Tabelle 4 hergestellten Fliessmörteln, die erfindungsgemässe Copolymere oder die üblichen konventionellen Fliessmittel enthalten, untersucht.

Die Dosierung erfolgte so, dass die Mischungen jeweils eine bestimmte Feststoffmenge des Fliessmittels im Bereich von 4,80 bis 1,20 %o, bezogen auf das Zementgewicht, enthielten.

Das Ausbreitmass wurde sofort nach dem Mischen gemessen und diese Messung dann 15, 30, 45, 60 bis 120 Minuten nach dem Anmischen wiederholt. Die Resultate in Tabelle 6 zeigen eine überraschend langandauernde zeitliche Konstanz des Ausbreitmasses von bis zu 120 Minuten bei den die erfindungsgemässen Fliessmitteln enthaltenden Mischungen Nr. 2 bis 12. Vergleicht man etwa die Mischungen Nr. 4 und 9, die beide einen Fliessmittelgehalt von nur 1,2 %o aufweisen, mit den handelsüblichen Naphthalin- und Melaminharze in Konzentrationen von 4,8 %o von als Fliessmittel enthaltenden Mischungen 16 und 17, so zeigen diese trotz vierfach höherem Fliessmittelgehalt bereits nach 30 Minuten ein starkes Ansteifen.

Vergleicht man die Mischungen Nr. 13 bis 15, die als Fliessmittel konventionelle Copolymerisate der Acrylsäure enthalten, mit den Mischungen Nr. 3, 6, 8, 11 und 12, so zeigt sich auch bei gleicher Dosierung der erfindungsgemässen Fliessmittel deren überraschend hohe verflüssigende Wirkung selbst noch nach 120 Minuten.

Untersuchungsbeispiel 2b

Es wurde die zeitliche Abnahme des Ausbreitmasses und des Setzungsmasses von erfindungsgemässe Fliessmittel enthaltendem Fliessbeton (Mischungen Nr. 2 bis 12) im Vergleich zu den Fliessbetonmischungen Nr. 13 bis 17, die einen der herkömmlichen Betonverflüssiger enthalten, untersucht. Voerst wurde ein Kontrollbeton ohne Fliessmittel mit einem Wasserzementwert von 0,55 nach den Angaben in Tabelle 5 hergestellt.

Ausbreitmass und Setzungsmass wurden sofort nach dem Mischen gemessen und diese Messung dann 15, 30, 45 usw. bis 180 Minuten nach dem Anmischen wiederholt. Vor jeder erneuten Messung erfolgte ein 5 Sekunden dauerndes Wiederaufmischen des Betons.

Die unter denselben Bedingungen hergestellten Betonmischungen Nr. 2 bis 17 wurden dann der oben beschriebenen Prüfung von Ausbreitmass und Slump in Abhängigkeit von der Zeit unterworfen. Die Messresultate sind in Tabelle 7 zusammengefasst. Daraus ist ersichtlich, dass die 2,4 oder 3,6 %o eines erfindungsgemässen Fliessmittels enthaltenden Mischungen ihre definitionsgemässen Eigenschaften eines Fliessbetons über volle 150 Minuten beibehalten, während vergleichsweise die beiden ein handelsübliches Naphthalin- oder Melaminkondensat enthaltenden Mischungen Nr. 16 bzw. 17 ihre Fliesseigenschaften nach 45 Minuten verlieren. Eine ähnliche Ansteifungstendenz zeigt auch das Vergleichspolymer VP1 in Mischung Nr. 13. Ein im Vergleich dazu besseres Resultat liefern dagegen die beiden herkömmlichen Copolymerisate auf Acrylsäurebasis in den Mischungen Nr. 14 und 15, in denen die Fliessfähigkeit während 90 Minuten erhalten bleibt.

Untersuchungsbeispiel 2c

Die im Untersuchungsbeispiel 2b durchgeführten Messungen von Ausbreitmass und Slump wurden an Betonmischungen, die mit W/Z = 0,48 einen weit geringeren Wassergehalt aufweisen, wiederholt.

Wie aus Tabelle 8 ersichtlich ist, bestätigen auch diese Messungen die überraschende und überlegene Wirksamkeit der erfindungsgemässen Copolymeren in den Mischungen Nr. 2 bis 6.

In Ergänzung dazu gibt Tabelle 9 eine Uebersicht über die Abbindezeiten und die zeitliche Entwicklung der Druckfestigkeiten dieser Mischungen. Daraus geht hervor, dass die erfindungsgemässen Fliessmittel in einer Konzentration von 3,6 %o das Abbinden und die Entwicklung der Frühfestigkeit etwas verzögern. Bei Fliessmittelkonzentrationen von 2,4 %o und 1,2 %o, wie sie in den Mischungen Nr. 3, 4 und 6 vorliegen, ist diese Verzögerung kaum mehr erkennbar, was durch die hohen Druckfestigkeiten zum Ausdruck kommt.

Zusammenfassend kann gesagt werden, dass man den Gehalt der erfindungsgemässen Fliessmittel in Baustoffmischungen soweit reduzieren kann, bis normale Festigkeitsentwicklung eintritt, ohne dass die in der Praxis geforderte Langzeit-Fliesswirkung beeinträchtigt wird (Tabelle 8).

Tabelle 6 Zeitabhängiges Ausbreitmass von veschiedene Fliessmittel enthaltenden Mörtelmischungen nach DIN 1855.2 bei 20°C

| Mischung Nr. | Fliessmittel-bezeichnung | Dosierung ‰ | W/Z | Ausbreitmass in mm, x Minuten nach dem Mischen | | | | | | | | |
|---|---|---|---|---|---|---|---|---|---|---|---|---|
| | | | | X = 0 | 15' | 30' | 45' | 60' | 75' | 90' | 105' | 120' |
| 1 | Ohne | - | 0,48 | 145 | 145 | 135 | 125 | 115 | 110 | 105 | 100 | 100 |
| 2 | $A_1B_2$ * | 3,60 | 0,48 | 290 | 295 | 295 | 297 | 295 | 293 | 290 | 290 | 295 |
| 3 | $A_1B_2$ * | 2,40 | 0,48 | 285 | 290 | 290 | 295 | 290 | 275 | 270 | 260 | 240 |
| 4 | $A_1B_2$ * | 1,20 | 0,48 | 267 | 250 | 242 | 225 | 202 | 180 | 168 | 160 | 151 |
| 5 | $A_2B_1$ * | 3,60 | 0,48 | 298 | 295 | 295 | 290 | 292 | 295 | 291 | 290 | 290 |
| 6 | $A_2B_1$ * | 2,40 | 0,48 | 290 | 290 | 291 | 288 | 285 | 283 | 280 | 270 | 255 |
| 7 | $A_2B_2$ * | 3,60 | 0,48 | >300 | 295 | 297 | 296 | 296 | 295 | 290 | 290 | 289 |
| 8 | $A_2B_2$ * | 2,40 | 0,48 | 295 | 290 | 290 | 291 | 288 | 285 | 285 | 280 | 281 |
| 9 | $A_2B_2$ * | 1,20 | 0,48 | 270 | 252 | 240 | 230 | 211 | 195 | 170 | 155 | 149 |
| 10 | $A_2B_3$ * | 3,60 | 0,48 | 298 | 295 | 295 | 290 | 290 | 285 | 280 | 280 | 270 |
| 11 | $A_2B_3$ * | 2,40 | 0,48 | 290 | 291 | 290 | 287 | 285 | 265 | 250 | 250 | 240 |
| 12 | $A_3B_2$ * | 2,40 | 0,48 | 280 | 280 | 275 | 270 | 260 | 260 | 250 | 248 | 220 |
| 13 | VP1 | 2,40 | 0,48 | 290 | 200 | 180 | 150 | 115 | 110 | 110 | 105 | 105 |
| 14 | VP2 | 2,40 | 0,48 | 293 | 260 | 255 | 240 | 215 | 200 | 185 | 180 | 150 |
| 15 | VP4 | 2,40 | 0,48 | 295 | 230 | 230 | 220 | 200 | 185 | 165 | 140 | 130 |
| 16 | VP5 | 4,80 | 0,48 | 285 | 275 | 193 | 165 | 155 | 150 | 140 | 120 | 105 |
| 17 | VP6 | 4,80 | 0,48 | 268 | 206 | 161 | 133 | 125 | 120 | 110 | 100 | 100 |

* Erfindungsgemässe Fliessmittel gemäss den Herstellungsbeispielen 2 bis 6.

<u>Tabelle 7</u> Zeitabhängiges Ansteifungsverhalten von Fliessbeton mit verschiedenen Fliessmitteln.
Ausbreitmass nach DIN 1048.1 ; Setzmass (Slump) nach ASTM C143. Messtemperatur 20°C

| Mischung Nr. | Fliessmittel-bezeichnung | Dosierung ‰ | W/Z | Ausbreitmass/Slump in cm, x Minuten nach dem Mischen | | | | | | | | |
|---|---|---|---|---|---|---|---|---|---|---|---|---|
| | | | | x = 0' | 15' | 30' | 45' | 60' | 90' | 120' | 150' | 180' |
| 1 | Ohne | - | 0,55 | 43/10 | 43/10 | 43/6 | 42/5 | 40/4 | 35/4 | 31/1 | - | - |
| 2 | $A_1B_2$ * | 3,60 | 0,55 | 63/24 | 62/24 | 60/23 | 61/23 | 60/22 | 60/22 | 60/22 | 56/20 | 51/19 |
| 3 | $A_1B_2$ * | 2,40 | 0,55 | 61/24 | 62/23 | 60/22 | 61/22 | 60/21 | 58/21 | 57/20 | 53/19 | 48/17 |
| 4 | $A_1B_2$ * | 1,20 | 0,55 | 56/23 | 55/21 | 55/20 | 51/19 | 50/18 | 47/17 | 38/13 | 35/8 | 31/4 |
| 5 | $A_2B_1$ * | 3,60 | 0,55 | 61/24 | 60/23 | 60/22 | 60/22 | 58/21 | 57/4 | 55/20 | 50/20 | 50/19 |
| 6 | $A_2B_1$ * | 2,40 | 0,55 | 60/22 | 60/22 | 58/23 | 57/22 | 57/21 | 55/20 | 55/20 | 51/19 | 45/16 |
| 7 | $A_2B_2$ * | 3,60 | 0,55 | 62/24 | 63/23 | 62/23 | 61/22 | 60/22 | 60/21 | 60/21 | 55/20 | 52/21 |
| 8 | $A_2B_2$ * | 2,40 | 0,55 | 60/23 | 61/23 | 60/23 | 60/22 | 60/21 | 59/20 | 58/20 | 54/19 | 51/18 |
| 9 | $A_2B_2$ * | 1,20 | 0,55 | 58/22 | 53/22 | 51/21 | 50/21 | 48/19 | 46/17 | 40/15 | 34/10 | 30/5 |
| 10 | $A_2B_3$ * | 3,60 | 0,55 | 61/23 | 60/22 | 60/22 | 60/21 | 60/21 | 58/20 | 55/20 | 51/19 | 50/18 |
| 11 | $A_2B_3$ * | 2,40 | 0,55 | 61/22 | 60/22 | 60/21 | 58/20 | 56/20 | 55/20 | 51/18 | 50/17 | 45/16 |
| 12 | $A_3B_2$ * | 2,40 | 0,55 | 62/23 | 61/22 | 60/22 | 58/21 | 57/21 | 56/20 | 53/18 | 49/16 | 43/15 |
| 13 | VP1 | 2,40 | 0,55 | 58/21 | 52/20 | 50/20 | 50/18 | 45/16 | 40/12 | 35/7 | 31/2 | - |
| 14 | VP2 | 2,40 | 0,55 | 61/24 | 60/23 | 60/22 | 58/22 | 56/21 | 53/20 | 48/18 | 44/15 | 41/12 |
| 15 | VP4 | 2,40 | 0,55 | 62/23 | 60/22 | 60/21 | 58/21 | 57/20 | 55/20 | 47/17 | 40/12 | 32/6 |
| 16 | VP5 | 4,80 | 0,55 | 59/22 | 53/21 | 53/19 | 50/18 | 48/16 | 46/15 | 40/12 | - | - |
| 17 | VP6 | 4,80 | 0,55 | 58/21 | 51/20 | 50/15 | 45/10 | 40/7 | 37/3 | 33/1 | - | - |

* Erfindungsgemässe Fliessmittel gemäss den Herstellungsbeispielen 2 bis 6.

Tabelle 8 Zeitabhängiges Ansteifungsverhalten von Beton vo. W/Z = 0,48 mit verschiedenen Fliessmitteln.
Ausbreitmass nach DIN 1048.1 ; Setzmass (Slump) nach ASTM C143. Messtemperatur 20°C

| Mischung Nr. | Fliessmittel-bezeichnung | Dosierung ‰ | W/Z | Ausbreitmass/Slump in cm. x Minuten nach dem Mischen | | | | | | | | |
|---|---|---|---|---|---|---|---|---|---|---|---|---|
| | | | | x = 0 | 15' | 30' | 45' | 60' | 90' | 105' | 120' | 135' |
| 1 | O | - | 0,48 | 32/3 | 31/3 | 30/2 | 30/1 | - | - | - | - | - |
| 2 | $A_2B_2$ * | 3,60 | 0,48 | 60/22 | 60/21 | 59/22 | 59/22 | 59/2 | 53/21 | 52/20 | 50/19 | 42/12 |
| 3 | $A_2B_2$ * | 2,40 | 0,48 | 60/22 | 59/21 | 59/20 | 58/20 | 50/20 | 50/20 | 50/20 | 47/15 | 42/10 |
| 4 | $A_2B_2$ * | 1,20 | 0,48 | 55/18 | 50/15 | 48/15 | 43/11 | 40/10 | 38/10 | 33/8 | - | - |
| 5 | $A_4B_2$ * | 3,60 | 0,48 | 58/20 | 56/20 | 55/20 | 52/20 | 50/19 | 47/15 | 35/10 | - | - |
| 6 | $A_4B_2$ * | 2,40 | 0,48 | 49/16 | 44/16 | 39/8 | 39/4 | 39/4 | 36/2 | 30/1 | - | - |
| 7 | VP2 | 2,40 | 0,48 | 56/20 | 48/16 | 44/16 | 44/7 | 38/5 | 35/3 | 30/1 | - | - |
| 8 | VP4 | 2,40 | 0,48 | 54/19 | 42/12 | 42/12 | 39/4 | 37/3 | 33/2 | 30/2 | - | - |
| 9 | VP5 | 4,80 | 0,48 | 61/20 | 55/18 | 51/15 | 42/11 | 39/10 | 37/9 | 33/4 | - | - |
| 10 | VP6 | 4,80 | 0,48 | 56/21 | 51/16 | 43/10 | 38/6 | 33/3 | 31/1 | - | - | - |

* Erfindungsgemässe Fliessmittel gemäss den Herstellungsbeispielen 4 und 7.

Tabelle 9 Abbindebeginn nach ASTM C403, Ausbreitmass und Druckfestigkeit nach DIN 1048.1 von Fliessmittel enthaltenden Betonmischungen.

| Mischung Nr. | 1 | 2 | 3 | 4 | 5 | 6 | 7 | 8 | 9 | 10 |
|---|---|---|---|---|---|---|---|---|---|---|
| Fliessmittelbezeichnung | 0 | $A_2B_2$* | $A_2B_2$* | $A_2B_2$* | $A_4B_2$* | $A_4B_2$* | VP2 | VP4 | VP5 | VP6 |
| Dosierung (%o) | - | 3,6 | 2,4 | 1,2 | 3,6 | 2,4 | 2,4 | 2,4 | 4,8 | 4,8 |
| W/Z | 0,48 | 0,48 | 0,48 | 0,48 | 0,48 | 0,48 | 0,48 | 0,48 | 0,48 | 0,48 |
| Abbindebeginn, in h nach Mischen | 2,75 | 10,0 | 7,0 | 4,0 | 7,5 | 4,0 | 5,5 | 8 | 3,75 | 3 |
| Ausbreitmass in cm | 32 | 60 | 60 | 55 | 58 | 49 | 56 | 54 | 61 | 56 |
| Druckfestigkeit ($N/mm^2$) nach | | | | | | | | | | |
| 1 Tag | 20,3 | 14,9 | 21,4 | 22,2 | 18,5 | 21,4 | 21,7 | 22,9 | 24,1 | 24,3 |
| 7 Tage | 39,7 | 32,8 | 41,3 | 37,3 | 37,7 | 40,8 | 36,4 | 37,0 | 40 | 42,5 |
| 28 Tage | 43,7 | 39,7 | 46,5 | 44 | 46,0 | 45,2 | 41,2 | 45,1 | 47,4 | 47,8 |

* Erfindungsgemässe Fliessmittel gemäss den Herstellungsbeispielen 4 und 7.

**Patentansprüche**

**Patentansprüche für folgende Vertragsstaaten : AT, BE, CH, DE, DK, FR, GB, IT, LI, LU, NL, SE**

1. Ein wasserlösliches lineares Copolymer, welches aus Teilstruktureinheiten der Formel A

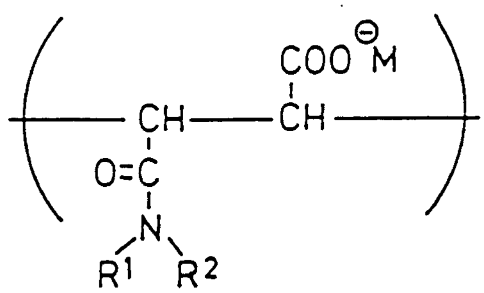

(A)

und/oder
aus Teilstruktureinheiten der Formel B

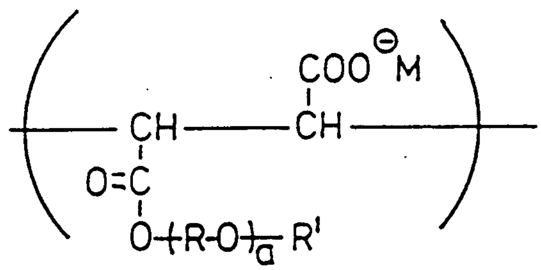

(B)

und
aus Teilstruktureinheiten der Formel C

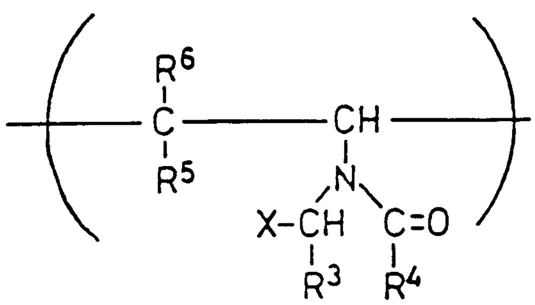

(C)

aufgebaut ist, worin
$R^1$ und $R^2$ unabhängig voneinander Wasserstoff, einen gegebenenfalls eine Alkalicarboxylat- oder Erdalkalicarboxylatgruppe aufweisenden $C_1$- bis $C_{20}$-Alkylrest, einen gegebenenfalls eine Sulfonsäuregruppe oder eine Alkalisulfonat- oder Erdalkalisulfonatgruppe aufweisenden aromatischen, aliphatischen oder cycloaliphatischen Rest, eine Hydroxyalkylgruppe, vorzugsweise eine Hydroxyethyl- oder Hydroxypropylgruppe, bedeuten oder zusammen, unter Einschluss des Stickstoffatomes, an welches sie gebunden sind, einen Morpholinring bilden;
M ein Wasserstoffion, ein mono- oder divalentes Metallion oder eine, gegebenenfalls substituierte Ammoniumgruppe;
R eine Alkylengruppe mit 2 bis 4 Kohlenstoffatomen,
R' ein Wasserstoffatom oder eine Alkylgruppe mit 1 bis 4 Kohlenstoffatomen,
a eine Zahl im Bereich von 1 bis 100,
$R^3$ und $R^4$ unabhängig voneinander Wasserstoff, einen $C_1$- bis $C_{12}$-Alkylrest, einen Phenylrest oder

zusammen eine Di-, Tri- oder Tetramethylengruppe, die unter Einschluss des Restes der Formel

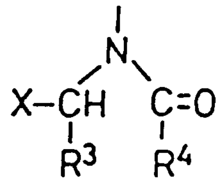

einen fünf-, sechs- oder siebengliedrigen Ring bilden;
$R^5$ und $R^6$ unabhängig voneinander Wasserstoff, einen $C_1$- bis $C_{12}$-Alkylrest oder einen Phenylrest; und
X ein Wasserstoffatom, einen $C_1$- bis $C_4$-Alkylrest, eine Carboxylsäure- oder Alkalicarboxylatgruppe bedeuten,

mit der Massgabe, dass in einem Copolymer, das ausschliesslich aus der Formel B abgeleitete Teilstruktureinheiten der Formel $\overline{B}$

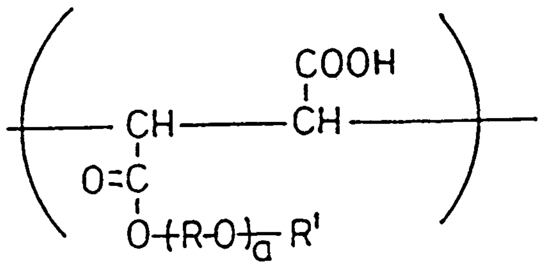

$(\overline{B})$

und Teilstruktureinheiten der Formel C enthält, die Reste $R^3$ und $R^4$ zusammen weder eine Di- noch eine Tri- oder eine Tetramethylengruppe bilden dürfen, sofern $R^5 = R^6 =$ Wasserstoff und $a > 1$ sind.

**2.** Copolymer nach Anspruch 1, dadurch gekennzeichnet, dass
r Teilstruktureinheiten, vorzugsweise von 3 bis 1000 der Formel C,
**und**
p Teilstruktureinheiten, vorzugsweise 3 bis 1000, wobei $p \leqq r$, der Formel (A)
**oder**
q Teilstruktureinheiten, vorzugsweise von 3 bis 1000, wobei $q \leqq r$, der Formel (B)
vorhanden sind.

**3.** Copolymer nach Anspruch 2, dadurch gekennzeichnet, dass in einem Copolymer aus Teilstruktureinheiten der Formel (A) und Teilstruktureinheiten der Formel (C) diese alternierend aneinander gebunden sind.

**4.** Copolymer nach einem der Ansprüche 1 bis 3, dadurch gekennzeichnet, dass

$R^1$ = H und

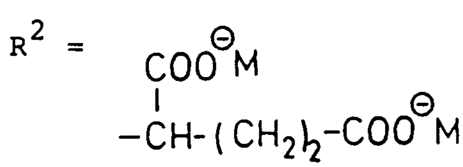

bedeuten, und M in Anspruch 1 definiert ist.

**5.** Copolymer nach einem der Ansprüche 1 bis 4, dadurch gekennzeichnet, dass es aus den Teilstruktureinheiten der Formel 1

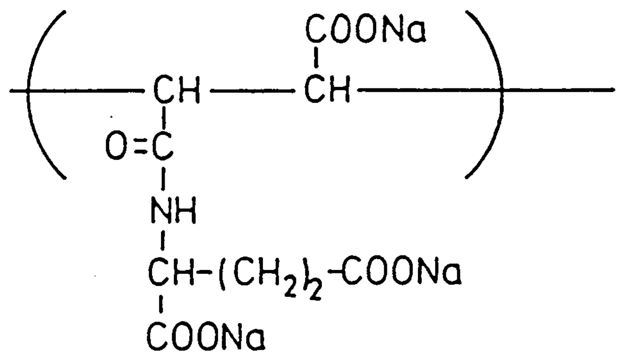

(1)

und den Teilstruktureinheiten der Formel 2

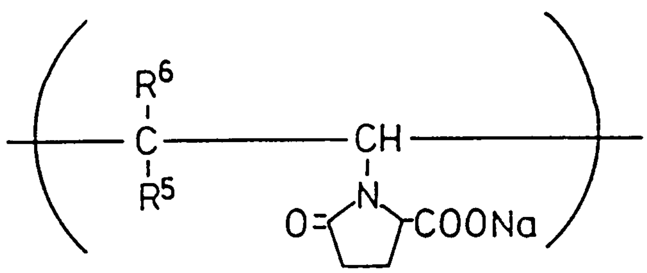

(2)

worin $R^5$ und $R^6$ unabhängig voneinander Wasserstoff oder eine Methylgruppe bedeuten, aufgebaut ist.

**6.** Copolymer nach einem der Ansprüche 1 bis 4, dadurch gekennzeichnet, dass es aus den Teilstruktureinheiten der Formel 1

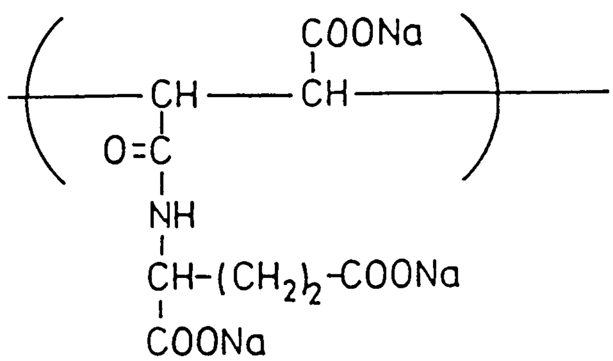

(1)

und den Teilstruktureinheiten der Formel 3

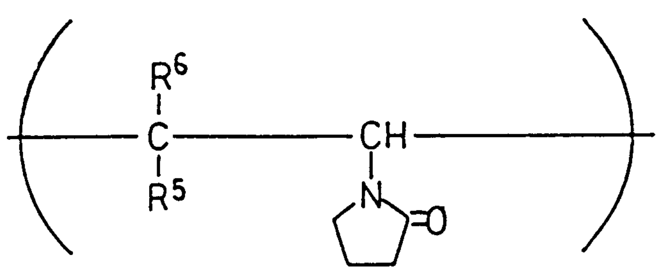

(3)

worin $R^5$ und $R^6$ unabhängig voneinander Wasserstoff oder eine Methylgruppe bedeuten, aufgebaut ist.

**7.** Copolymer nach einem der Ansprüche 1 bis 3, dadurch gekennzeichnet, dass

$R^1$ = H und

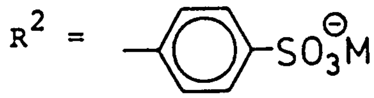

bedeuten, und
M in Anspruch 1 definiert ist.

**8.** Copolymer nach einem der Ansprüche 1 bis 3 und 7, dadurch gekennzeichnet, dass es aus den Teilstruktureinheiten der Formel 4

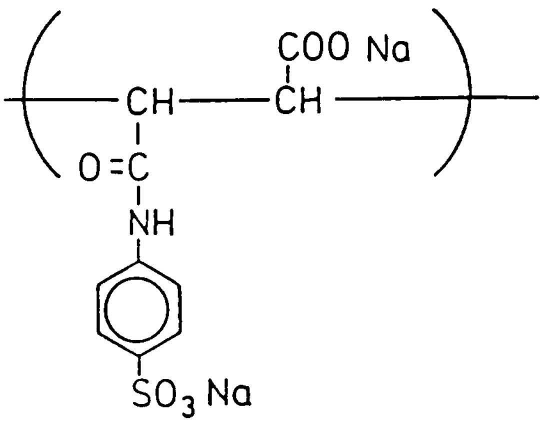

(4)

und den Teilstruktureinheiten der Formel 2

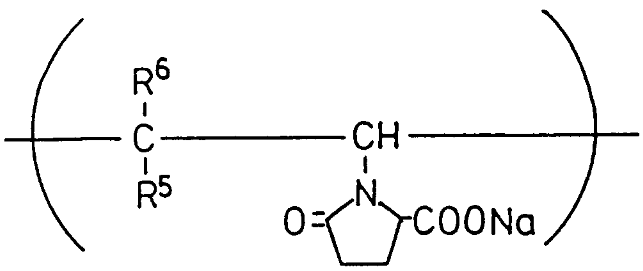

(2)

worin $R^5$ und $R^6$ unabhängig voneinander Wasserstoff oder eine Methylgruppe bedeuten, aufgebaut ist.

**9.** Copolymer nach einem der Ansprüche 1 bis 3 und 7, dadurch gekennzeichnet, dass es aus den Teilstruktureinheiten der Formel 4

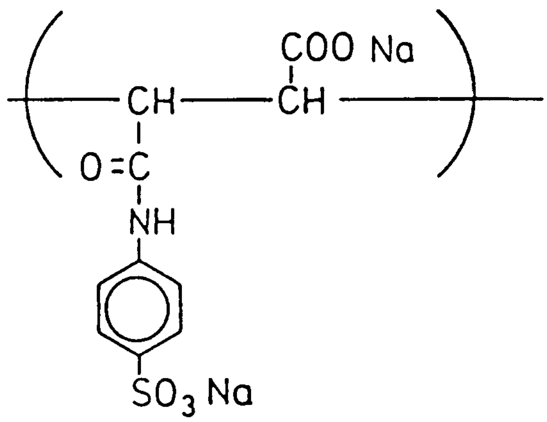

(4)

und den Teilstruktureinheiten der Formel 3

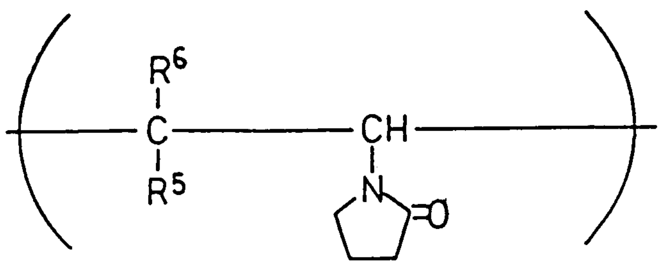

(3)

worin $R^5$ und $R^6$ unabhängig voneinander Wasserstoff oder eine Methylgruppe bedeuten, aufgebaut ist.

**10.** Copolymer nach einem der Ansprüche 1 bis 3 und 7, dadurch gekennzeichnet, dass es aus den Teilstruktureinheiten der Formel 4

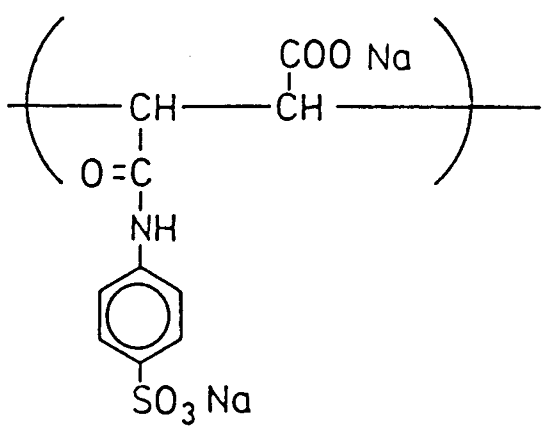

(4)

und den Teilstruktureinheiten der Formel 5

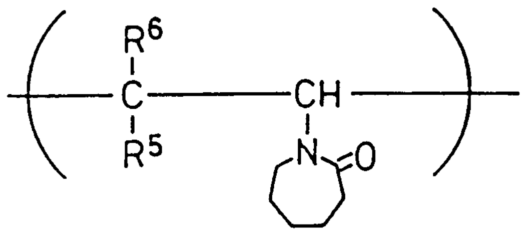

(5)

worin $R^5$ und $R^6$ unabhängig voneinander Wasserstoff oder eine Methylgruppe bedeuten, aufgebaut ist.

**11.** Copolymer nach einem der Ansprüche 1 bis 3, dadurch gekennzeichnet, dass es aus den Teilstruktureinheiten der Formel 6

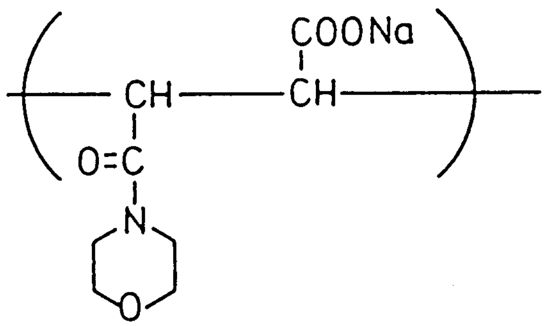

(6)

und den Teilstruktureinheiten der Formel 3

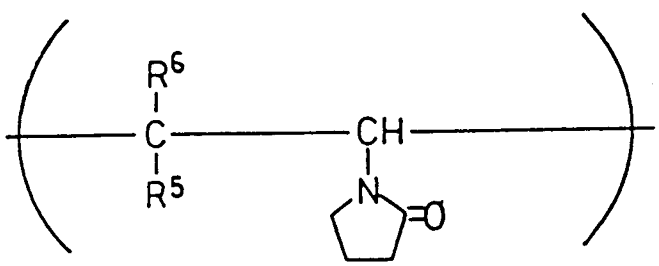

(3)

worin $R^5$ und $R^6$ unabhängig voneinander Waserstoff oder eine Methylgruppe bedeuten, aufgebaut ist.

**12.** Verfahren zur Herstellung von Copolymerisaten gemäss einem der Ansprüche 1 bis 11, gekennzeichnet durch die radikalische Copolymerisation von

a) 0 bis 60 mol % eines Monomeren der allgemeinen Formel 7

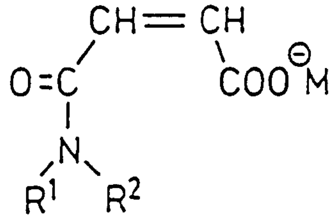

(7)

worin $R^1$, $R^2$ und M in Anspruch 1 definiert sind, und/oder

b) 0 bis 60 mol % eines Monomeren der allgemeinen Formel 8

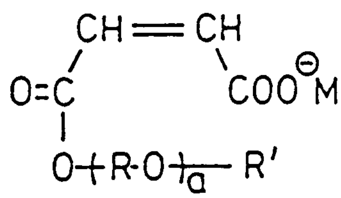

(8)

worin R, R', M und a in Anspruch 1 definiert sind, mit
c) 40 bis 60 mol % eines Monomeren der allgemeinen Formel 9

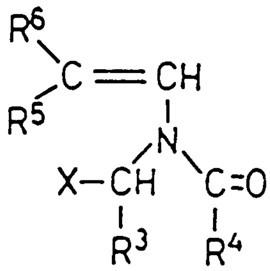

(9)

worin $R^3$, $R^4$, $R^5$, $R^6$ und X in Anspruch 1 definiert sind, und die Summe aus a) bis c) immer 100 mol % ergeben muss, in einem Lösungsmittel unter Verwendung von mindestens einem Polymerisationskatalysator, wenigstens einem Kettenlängenregler vorzugsweise bei Temperaturen von 20 bis 100 ° C, insbesondere von 20 bis 75 ° C.

**13.** Verfahren nach Anspruch 12, dadurch gekennzeichnet, dass man 50 mol % eines Monomeren der allgemeinen Formel 7 mit 50 mol % eines Monomeren der allgemeinen Formel 9 umsetzt.

**14.** Verfahren nach einem der Ansprüche 12 und 13, dadurch gekennzeichnet, dass man als Monomere der allgemeinen Formel 7 deren Natriumsalze einsetzt.

**15.** Verfahren nach einem der Ansprüche 12 bis 14, dadurch gekennzeichnet, dass man als Lösungsmittel Wasser und/oder einen Alkohol, z.B. Isopropanol, verwendet.

**16.** Verfahren nach einem der Ansprüche 12 bis 15, dadurch gekennzeichnet, dass man als Katalysator Wasserstoffperoxid oder Natriumperoxid einsetzt.

**17.** Verfahren nach einem der ansprüche 12 bis 16, dadurch gekennzeichnet, dass man bei pH-Werten von 4,5 bis 7,0 arbeitet.

**18.** Verfahren nach einem der Ansprüche 12 bis 17, dadurch gekennzeichnet, dass man in einer offenen Atmosphäre arbeitet.

**19.** Verwendung der Copolymeren nach einem der Ansprüche 1 bis 11 als Dispergiermittel für Feststoffe in Wasser enthaltenden Zusammensetzungen.

**20.** Verwendung nach Anspruch 19, dadurch gekennzeichnet, dass die Copolymeren in Form ihrer wässrigen Lösungen mit einem Gehalt von 0,01 bis 60 Gew.-%, vorzugsweise 0,01 bis 5 Gew.-%, eingesetzt werden.

**21.** Verwendung nach einem der Ansprüche 19 bis 20, dadurch gekennzeichnet, dass die genannte Zusammensetzung wenigstens ein anorganisches, hydraulisches Bindemittel und Zuschlagstoffe enthält, sowie gegebenenfalls wenigstens einen Bestandteil, ausgewählt aus der Gruppe, bestehend aus

Luftporenbildnern, Betonverflüssigern, Hochleistungsbetonverflüssigern, Mörtelverflüssigern, Abbindebeschleunigern und Abbindeverzögerern.

**Patentansprüche für folgenden Vertragsstaat : ES**

1. Verfahren zur Herstellung von wasserlöslichen Copolymeren, welche aus Teilstruktureinheiten der Formel A

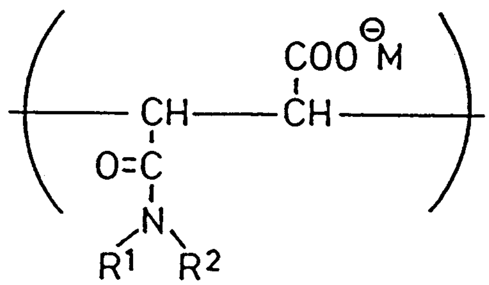

(A)

und/oder
aus Teilstruktureinheiten der Formel B

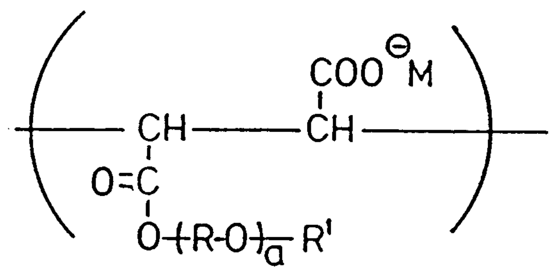

(B)

und
aus Teilstruktureinheiten der Formel C

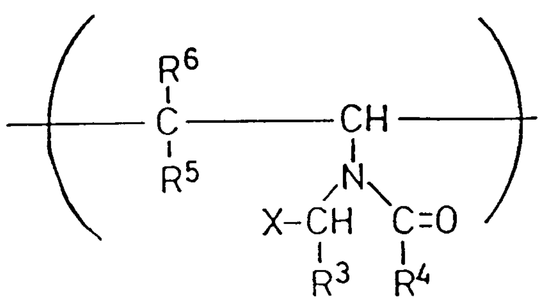

(C)

aufgebaut sind, worin
$R^1$ und $R^2$ unabhängig voneinander Wasserstoff, einen gegebenenfalls eine Alkalicarboxylat- oder Erdalkalicarboxylatgruppe aufweisenden $C_1$- bis $C_{20}$-Alkylrest, einen gegebenenfalls eine Sulfonsäuregruppe oder eine Alkalisulfonat- oder Erdalkalisulfonatgruppe aufweisenden aromatischen, aliphatischen oder cycloaliphatischen Rest, eine Hydroxyalkylgruppe, Vorzugsweise eine Hydroxyethyl- oder Hydroxypropylgruppe, bedeuten oder zusammen, unter Einschluss des Stickstoffatomes, an welches sie gebunden sind, einen Morpholinring bilden;
M ein Wasserstoffion, ein mono- oder divalentes Metallion oder eine, gegebenenfalls substituierte Ammoniumgruppe;
R eine Alkylengruppe mit 2 bis 4 Kohlenstoffatomen,

R' ein Wasserstoffatom oder eine Alkylgruppe mit 1 bis 4 Kohlenstoffatomen,
a eine Zahl im Bereich von 1 bis 100,
$R^3$ und $R^4$ unabhängig voneinander Wasserstoff, einen $C_1$- bis $C_{12}$-Alkylrest, einen Phenylrest oder zusammen eine Di-, Tri- oder Tetramethylengruppe, die unter Einschluss des Restes der Formel

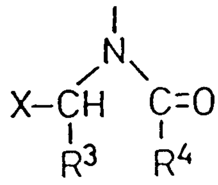

einen fünf-, sechs- oder siebengliedrigen Ring bilden;
$R^5$ und $R^6$ unabhängig voneinander Wasserstoff, einen $C_1$- bis $C_{12}$-Alkylrest oder einen Phenylrest; und
X ein Wasserstoffatom, einen $C_1$- bis $C_4$-Alkylrest, eine Carboxylsäure- oder Alkalicarboxylatgruppe bedeuten,

mit der Massgabe, dass in einem Copolymer, das ausschliesslich aus der Formel B abgeleitete Teilstruktureinheiten der Formel $\overline{B}$

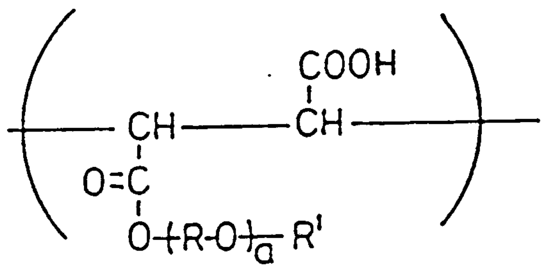

$(\overline{B})$

und Teilstruktureinheiten der Formel C enthält, die Reste $R^3$ und $R^4$ zusammen weder eine Di- noch eine Tri- oder eine Tetramethylengruppe bilden dürfen, sofern $R^5 = R^6 =$ Wasserstoff und $a > 1$ sind, gekennzeichnet durch die radikalische Copolymerisation von

a) 0 bis 60 mol % eines Monomeren der allgemeinen Formel I

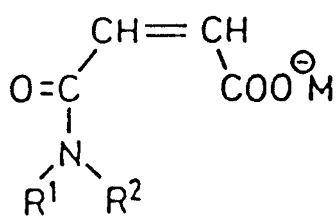

(I)

worin $R^1$, $R^2$ und M wie oben definiert sind, und/oder

b) 0 bis 60 mol % eines Monomeren der allgemeinen Formel II

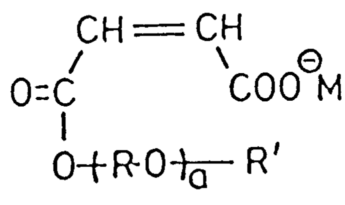

(II)'

worin R, R', M und a wie oben definiert sind, mit

c) 40 bis 60 mol % eines Monomeren der allgemeinen Formel III

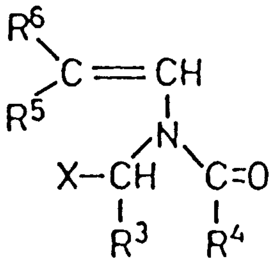

(III)

worin $R^3$, $R^4$, $R^5$, $R^6$ und X wie oben definiert sind, und wobei die Summe aus a) bis c) immer 100 mol % ergeben muss, in einem Lösungsmittel unter Verwendung von mindestens einem Polymerisationskatalysator, wenigstens einem Kettenlängenregler vorzugsweise bei Temperaturen von 20 bis 100° C.

2. Verfahren nach Anspruch 1, dadurch gekennzeichnet, dass ein Copolymer hergestellt wird, in dem
   r Teilstruktureinheiten, vorzugsweise von 3 bis 1000 der Formel C,
   **und**
   p Teilstruktureinheiten, vorzugsweise 3 bis 1000, wobei $p \leqq r$, der Formel (A)
   **oder**
   q Teilstruktureinheiten, vorzugsweise von 3 bis 1000, wobei $q \leqq r$, der Formel (B)
   vorhanden sind.

3. Verfahren nach Anspruch 2, dadurch gekennzeichnet, dass ein Copolymer hergestellt wird, in dem die Teilstruktureinheiten der Formel (A) und die Teilstruktureinheiten der Formel (C) alternierend aneinander gebunden sind.

4. Verfahren nach einem der Ansprüche 1 bis 3, dadurch gekennzeichnet, dass $R^1$ = H und

$R^2$ = 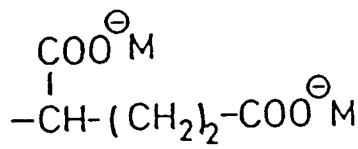

bedeuten, und M wie in Anspruch 1 definiert ist.

5. Verfahren nach einem der Ansprüche 1 bis 4, dadurch gekennzeichnet, dass Monomereinheiten der Formel Ia

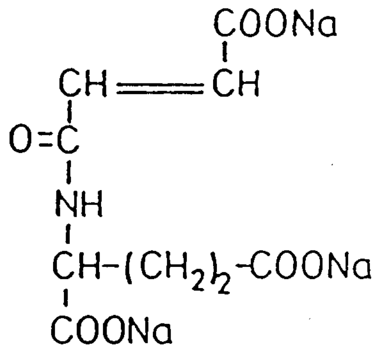

(Ia)

und Monomereinheiten der Formel IIIa

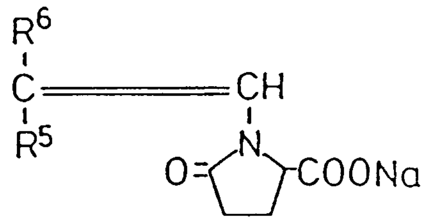

(IIIa)

worin $R^5$ und $R^6$ unabhängig voneinander Wasserstoff oder eine Methylgruppe bedeuten, copolymerisiert werden.

**6.** Verfahren nach einem der Ansprüche 1 bis 4, dadurch gekennzeichnet, dass Monomereinheiten der Formel Ia

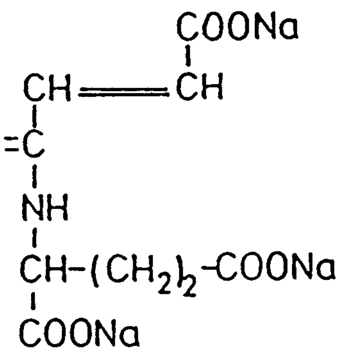

(Ia)

und Monomereinheiten der Formel IIIb

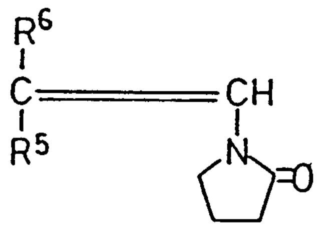

(IIIb)

worin $R^5$ und $R^6$ unabhängig voneinander Wasserstoff oder eine Methylgruppe bedeuten, copolymerisiert werden.

**7.** Verfahren nach einem der Ansprüche 1 bis 3, dadurch gekennzeichnet, dass $R^1$ = H und

$R^2$ = 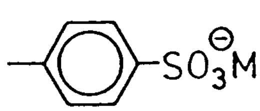

bedeuten, und
M wie in Anspruch 1 definiert ist.

**8.** Verfahren nach einem der Ansprüche 1 bis 3 oder 7, dadurch gekennzeichnet, dass Monomereinheiten der Formel Ib

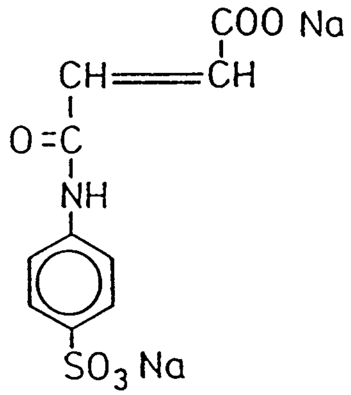

(Ib)

und Monomereinheiten der Formel IIIa

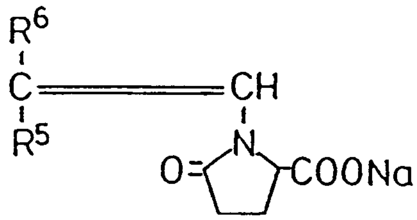

(IIIa)

worin $R^5$ und $R^6$ unabhängig voneinander Wasserstoff oder eine Methylgruppe bedeuten, copolymerisiert werden.

**9.** Verfahren nach einem der Ansprüche 1 bis 3 oder 7, dadurch gekennzeichnet, dass Monomereinheiten der Formel Ib

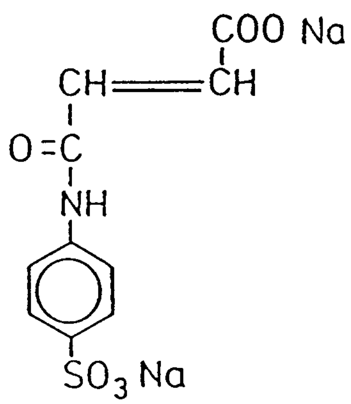

(Ib)

und Monomereinheiten der Formel IIIb

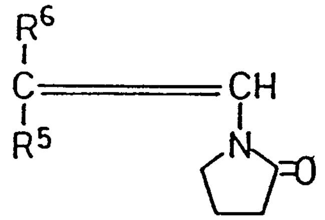

(IIIb)

worin $R^5$ und $R^6$ unabhängig voneinander Wasserstoff oder eine Methylgruppe bedeuten, copolymerisiert werden.

**10.** Verfahren nach einem der Ansprüche 1 bis 3 oder 7, dadurch gekennzeichnet, dass Monomereinheiten der Formel Ib

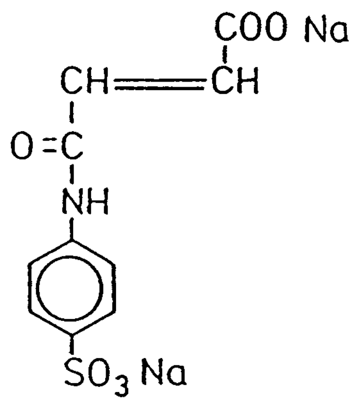

(Ib)

und Monomereinheiten der Formel IIIc

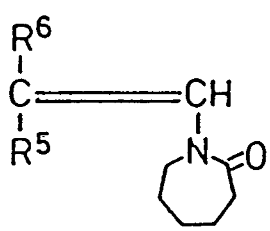

(IIIc)

worin $R^5$ und $R^6$ unabhängig voneinander Wasserstoff oder eine Methylgruppe bedeuten, copolymerisiert werden.

**11.** Verfahren nach einem der Ansprüche 1 bis 3, dadurch gekennzeichnet, dass Monomereinheiten der Formel Ic

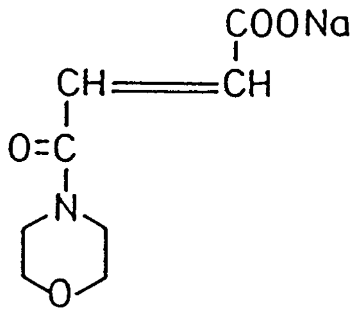

(Ic)

und Monomereinheiten der Formel IIIb

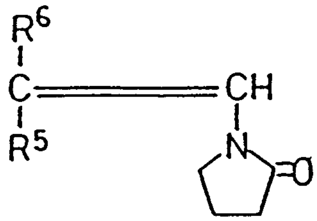

(IIIb)

worin $R^5$ und $R^6$ unabhängig voneinander Wasserstoff oder eine Methylgruppe bedeuten, copolymerisiert werden.

**12.** Verfahren nach einem der Ansprüche 1 bis 11, dadurch gekennzeichnet, dass die Reaktion bei Temperaturen von 20 bis 75 ° C durchgeführt wird.

**13.** Verfahren nach einem der Ansprüche 1 bis 12, dadurch gekennzeichnet, dass man 50 mol % eines Monomeren der allgemeinen Formel I mit 50% eines Monomeren der allgemeinen Formel III umsetzt.

**14.** Verfahren nach einem der Ansprüche 1 bis 13, dadurch gekennzeichnet, dass man als Monomere der allgemeinen Formel I deren Natriumsalze einsetzt.

**15.** Verfahren nach einem der Ansprüche 1 bis 14, dadurch gekennzeichnet, dass man als Lösungsmittel Wasser und/oder einen Alkohol, z.B. Isopropanol, verwendet.

**16.** Verfahren nach einem der Ansprüche 1 bis 15, dadurch gekennzeichnet, dass man als Katalysator Wasserstoffperoxid oder Natriumperoxid einsetzt.

**17.** Verfahren nach einem der Ansprüche 1 bis 16, dadurch gekennzeichnet, dass man bei pH-Werten von 4,5 bis 7,0 arbeitet.

**18.** Verfahren nach einem der Ansprüche 1 bis 17, dadurch gekennzeichnet, dass man in einer offenen Atmosphäre arbeitet.

**19.** Verwendung der erfindungsgemäss nach einem der Ansprüche 1 bis 18 hergestellten Copolymeren als Dispergiermittel für Feststoffe in Wasser enthaltenden Zusammensetzungen.

**20.** Verwendung nach Anspruch 19, dadurch gekennzeichnet, dass die Copolymeren in Form ihrer wässrigen Lösungen mit einem Gehalt von 0,01 bis 60 Gew.-%, vorzugsweise 0,01 bis 5 Gew.-%, eingesetzt werden.

**21.** Verwendung nach Anspruch 19 oder 20, dadurch gekennzeichnet, dass die genannte Zusammensetzung wenigstens ein anorganisches, hydraulisches Bindemittel und Zuschlagstoffe enthält, sowie gegebenenfalls wenigstens einen Bestandteil, ausgewählt aus der Gruppe, bestehend aus Luftporenbildnern, Betonverflüssigern, Hochleistungsbetonverflüssigern, Mörtelverflüssigern, Abbindebeschleunigern und Abbindeverzögerern.

**Claims**

**Claims for the following Contracting States : AT, BE, CH, DE, DK, FR, GB, IT, LI, LU, NL, SE**

1. A water-soluble linear copolymer comprising structural units of the formula A

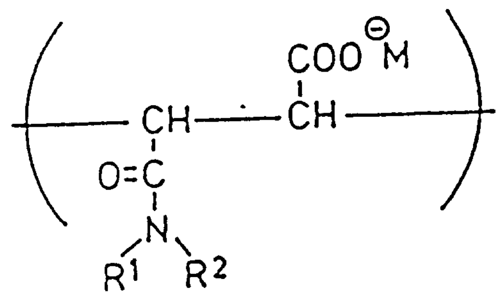

(A)

and/or structural units of the formula B

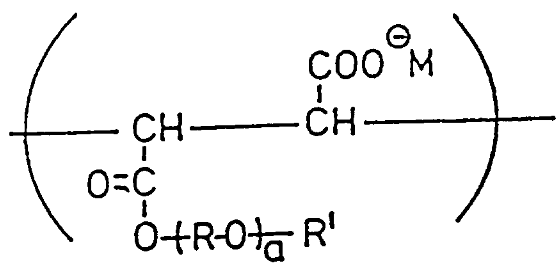

(B)

and of structural units of the formula C

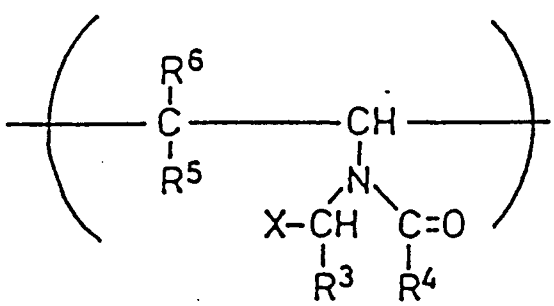

(C)

wherein $R^1$ and $R^2$, independently of one another, represent hydrogen, a $C_1$-to $C_{20}$-alkyl residue which may include an alkali metal carboxylate or alkaline earth metal carboxylate group, an aromatic, aliphatic or cyclo-aliphatic residue which may include a sulfonic acid group or an alkali metal sulfonate or alkaline earth metal sulfonate group, a hydroxyalkyl group, preferably a hydroxy-ethyl or hydroxypropyl group, or may together with the nitrogen atom to which they are bound, form a morpholine ring;

M represents a hydrogen ion, a monovalent or divalent metal ion or a, possibly substituted, ammonium group,

R represents an alkylene group having 2 to 4 carbon atoms,

R' represents a hydrogen atom or an alkyl group having 1 to 4 carbon atoms,

a represents an integer in the range from 1 to 100;

$R^3$ and $R^4$ independently of one another represent hydrogen, a $C_1$ to $C_{12}$-alkyl residue, a phenyl

residue, or together form a di-, tri-, or tetramethylene group, which form with the inclusion of the residue of the formula:

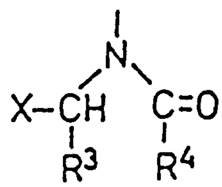

a five-, six-, or seven-membered ring;

$R^5$ and $R^6$ independently of one another represent hydrogen, a $C_1$ to $C_{12}$-alkyl residue or a phenyl residue; and

X represents a hydrogen atom, a $C_1$-to $^C4$-alkyl residue, a carboxylic acid group or alkali metal carboxylate group,with the restriction that, in a copolymer which contains exclusively structural units of the formula $\underline{\overline{B}}$, which is derived from the formula B and which is

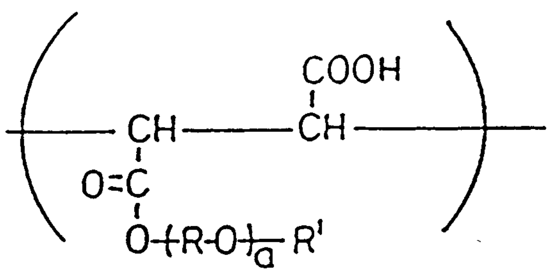

$(\overline{B})$

and structural units of the formula C, the residues $R^3$ and $R^4$ together should contain neither a di- nor a tri- nor tetra-methylene group insofar as $R^5 = R^6 =$ hydrogen and a>1.

**2.** Copolymer according to claim1, characterised in that
r structural units, preferably 3 to 1000, of the formula C are present and
p structural units, preferably 3 to 1000, of the formula (A) where $p \leqq r$ or
q structural units, preferably 3 to 1000, of the formula (B)
and $q \leqq r$

**3.** Copolymer according to claim 2 characterised in that in a copolymer comprising structural units of the formula (A) and structural units of the formula (C) these are joined together in an alternating manner.

**4.** Copolymer according to one of claims 1 to 3, characterised in that $R^1 = H$ and

$R^2 =$ 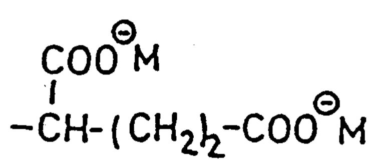

and M is defined in claim 1.

**5.** Copolymer according to one of claims 1 to 4 characterised in that it comprises the structural units of formula 1

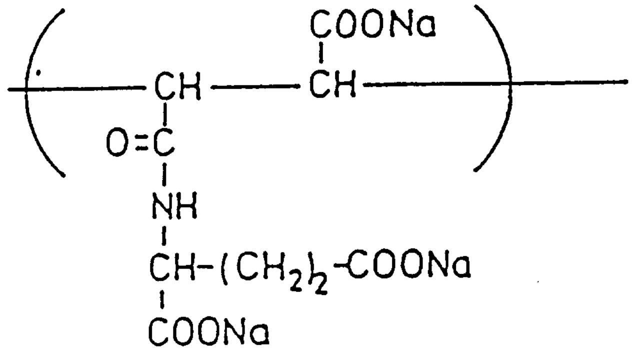

(1)

and the structural units of the formula 2

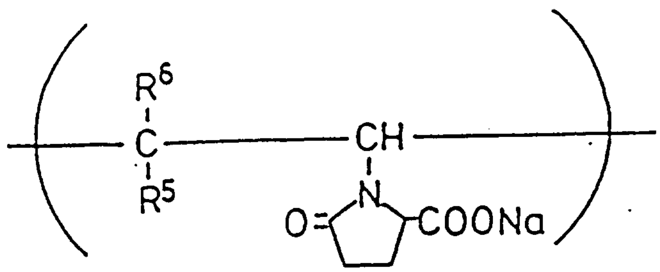

(2)

in which $R^5$ and $R^6$ independently of one another represent hydrogen or a methyl group.

6. Copolymer according to one of claims 1 to 4 characterised in that it comprises the structural units of the formula 1

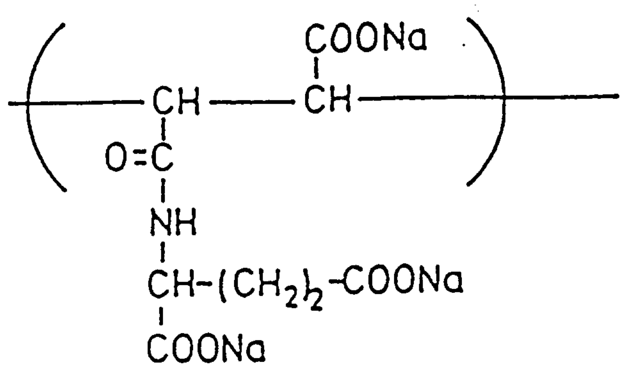

(1)

and the structural units of the formula 3

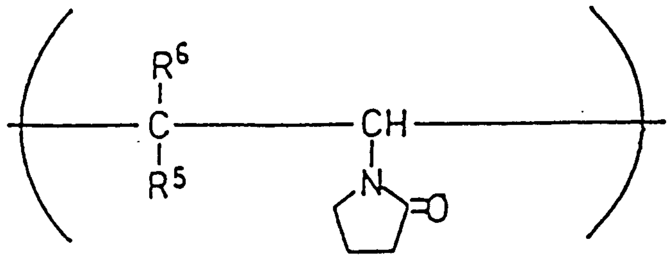

(3)

in which $R^5$ and $R^6$ independently of one another represent hydrogen or a methyl group.

**7.** Copolymer according to one of claims 1 to 3 characterised in that $R^1$ = H and

$R^2$ = 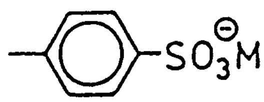

and M is defined in claim 1.

**8.** Copolymer according to one of claims 1 to 3 and 7 characterised in that it comprises the structural units of the formula 4

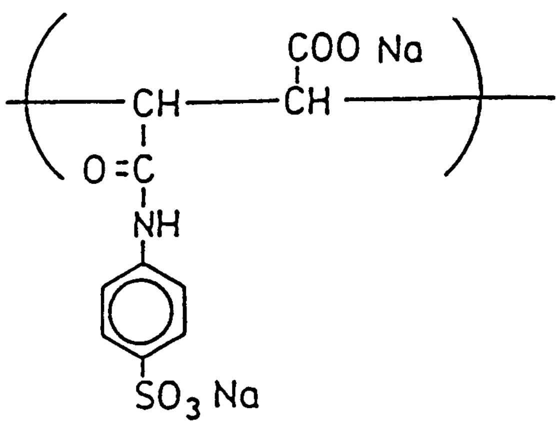

(4)

and the structural units of the formula 2

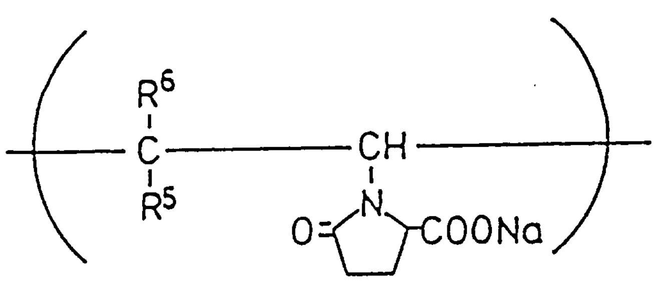

(2)

in which $R^5$ and $R^6$ independently of one another represent hydrogen or a methyl group.

**9.** Copolymer according to one of claims 1 to 3 and 7 characterised in that it comprises the structural units of the formula 4

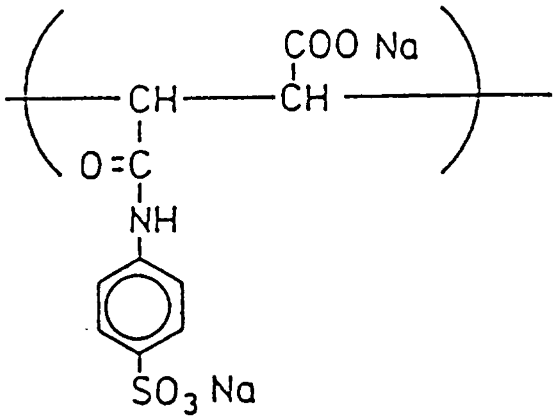

(4)

and the structural units of the formula 3

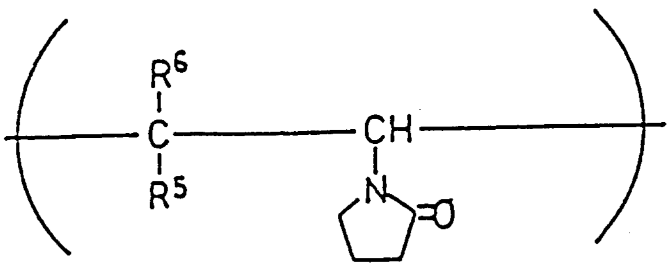

(3)

in which $R^5$ and $R^6$ independently of one another represent hydrogen or a methyl group.

**10.** Copolymer according to one of claims 1 to 3 and 7 characterised in that it comprises the structural units of the formula 4

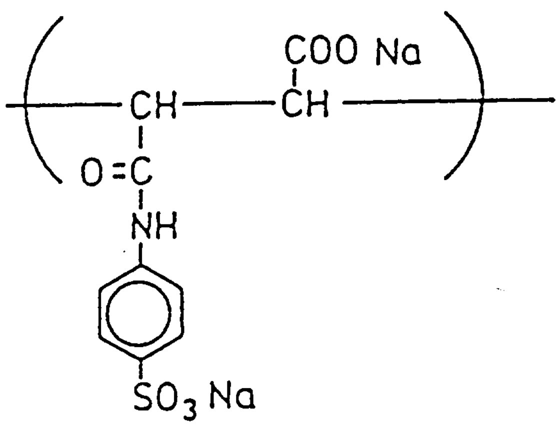

(4)

and the structural units of the formula 5

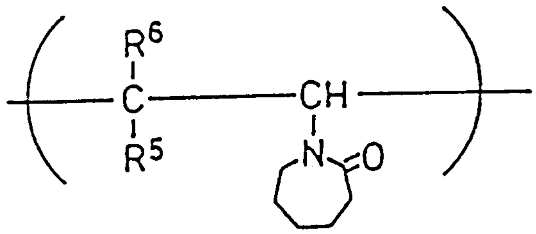

(5)

in which $R^5$ and $R^6$ independently of one another represent hydrogen or a methyl group.

**11.** Copolymer according to one of claims 1 to 3 characterised in that it comprises the structural units of the formula 6

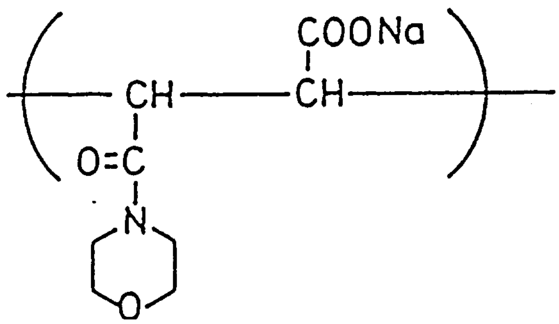

(6)

and the structural units of the formula 3

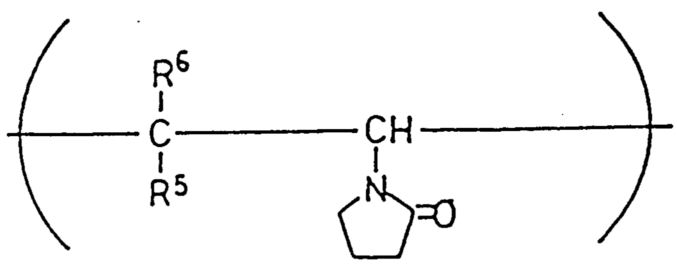

(3)

in which $R^5$ and $R^6$ independently of one another represent hydrogen or a methyl group.

**12.** Process for the manufacture of copolymerisates according to one of claims 1 to 11 characterised by the radical copolymerisation of

a) 0 to 60 mol % of a monomer of the general formula 7

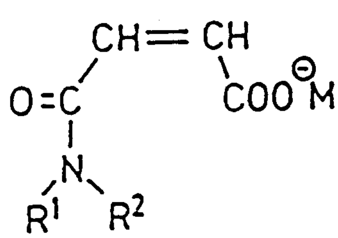

(7)

in which $R^1$, $R^2$ and M are defined in claim 1, and/or

b) 0 to 60 mol % of a monomer of the general formula 8

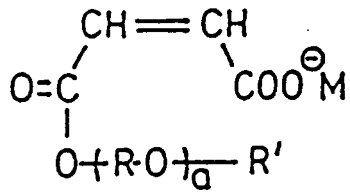

(8)

in which R, R',M and a are defined in claim 1, with
c) 40 to 60 mol % of a monomer of the general formula 9

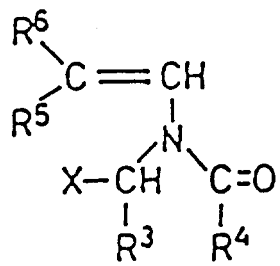

(9)

in which $R^3$, $R^4$, $R^5$, $R^6$ and X are defined in claim 1,
and the sum of a) to c) must always give 100 mol %, in a solvent with the use of at least one polymerisation catalyst, at least One chain-length regulator preferably at temperatures of 20 to 100 °C, especially 20 to 75 °C.

**13.** Process according to claim 12 characterised in that 50 mol % of a monomer of the general formula 7 is combined with 50 mol % of a monomer of the general formula 9.

**14.** Process according to one of claims 12 and 13 characterised in that as a monomer of the general formula 7 the sodium salt is employed.

**15.** Process according to one of claims 12 to 14 characterised in that water and/or an alcohol, e.g. isopropanol, is used as the solvent.

**16.** Process according to one of claims 12 to 15 characterised in that hydrogen peroxide or sodium peroxide is employed as the catalyst.

**17.** Process according to one of claims 12 to 16 characterised in that it is performed at pH values of from 4.5 to 7.0.

**18.** Process according to one of claims 12 to 17 characterised in that it is performed in an open atmosphere.

**19.** The use of the copolymers according to one of claims 1 to 11 as a dispersant for solids in water containing compositions.

**20.** Use according to claim 19 characterised in that the copolymers are employed in the form of their aqueous solutions with a content of 0.01 to 60 % by weight, preferably 0.01 to 5 % by weight.

**21.** Use according to one of claims 19 to 20 characterised in that the said composition contains at least one inorganic hydraulic binder and additives, and possibly at least one component selected from the group comprising air pore formers, concrete fluidisers, high-strength concrete fluidisers, mortar fluidisers, setting accelerators and setting retarders.

**Claims for the following Contracting State : ES**

**1.** Process for the manufacture of water-soluble linear copolymers comprising structural units of the formula A

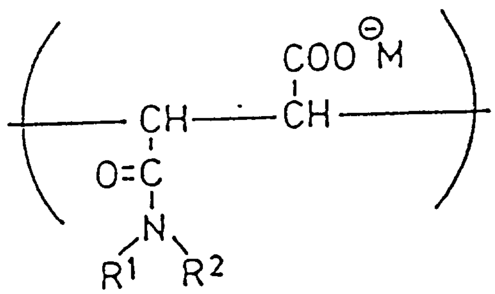

(A)

and/or structural units of the formula B

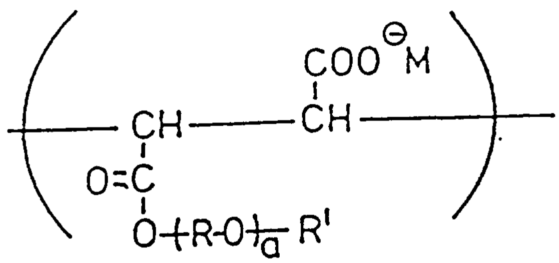

(B)

and of structural units of the formula C

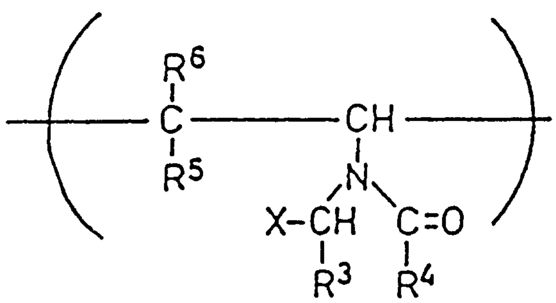

(C)

wherein $R^1$ and $R^2$, independently of one another, represent hydrogen, a $C_1$-to $C_{20}$-alkyl residue which may include an alkali metal carboxylate or alkaline earth metal carboxylate group, an aromatic, aliphatic or cyclo-aliphatic residue which may include a sulfonic acid group or an alkali metal sulfonate or alkaline earth metal sulfonate group, a hydroxyalkyl group, preferably a hydroxy-ethyl or hydroxypropyl group, or may together with the nitrogen atom to which they are bound, form a morpholine ring;

M represents a hydrogen ion, a monovalent or divalent metal ion or a, possibly substituted, ammonium group,

R represents an alkylene group having 2 to 4 carbon atoms,

R' represents a hydrogen atom or an alkyl group having 1 to 4 carbon atoms,

a represents an integer in the range from 1 to 100;

$R^3$ and $R^4$ independently of one another represent hydrogen, a $C_1$ to $C_{12}$-alkyl residue, a phenyl residue, or together form a di-, tri-, or tetramethylene group, which form with the inclusion of the residue of the formula:

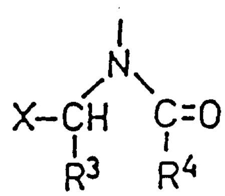

a five-, six-, or seven-membered ring;

$R^5$ and $R^6$ independently of one another represent hydrogen, a $C_1$ to $C_{12}$-alkyl residue or a phenyl residue; and

X represents a hydrogen atom, a $C_1$-to $^{C}4$-alkyl residue, a carboxylic acid group or alkali metal carboxylate group, with the restriction that, in a copolymer which contains exclusively structural units of the formula $\overline{B}$, which is derived from the formula B and which is

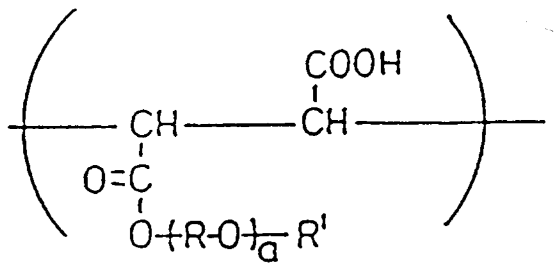

$(\overline{B})$

and structural units of the formula C, the residues $R^3$ and $R^4$ together should contain neither a di- nor a tri- nor a tetra-methylene group insofar as $R^5$ = $R^6$ = hydrogen and $a>1$,
characterised by the radical copolymerisation of

a) 0 to 60 mol % of a monomer of the general formula I

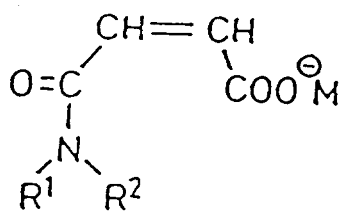

(I)

in which $R^1$, $R^2$ and M are as defined above and/or

b) 0 to 60 mol % of a monomer of the general formula II

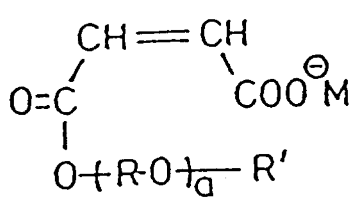

(II)

in which R, R', M and a are as defined above, with

c) 40 to 60 mol % of a monomer of the general formula III

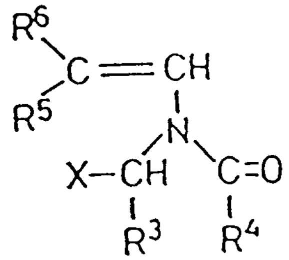

(III)

in which $R^3$,$R^4$,$R^5$$R^6$ and X are as defined above and the sum of a) to c) must always total 100 mol% in a solvent using at least one polymerisation catalyst, at least one chain- length regulator preferably at temperatures from 20 to 100°.

**2.** Process according to claim 1, characterised in that there is produced a copolymer in which:
r structural units, preferably 3 to 1000, of the formula (C) are present, and
p structural units, preferably 3 to 1000, of the formula (A) where p ≦ r or
q structural units, preferably 3 to 1000, of the formula (B)
and q ≦ r

**3.** Process according to claim 2 characterised in that there is produced a copolymer in which thestructural units of the formula (A) and the structural units of the formula (C) are joined together in an alternating manner.

**4.** Process according to one of claims 1 to 3, characterised in that $R^1$ = H and

$R^2$ =

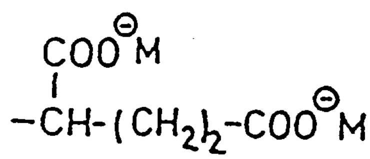

and M is defined in claim 1.

**5.** Process according to one of claims 1 to 4 characterized in that monomer units of formula 1a

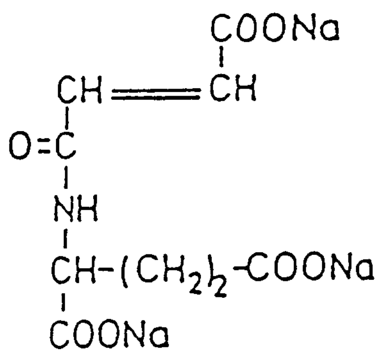

(1a)

and monomer units of the formula IIIa

(IIIa)

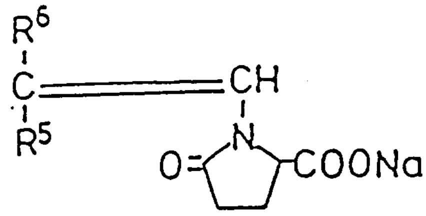

in which $R^5$ and $R^6$ independently of one another represent hydrogen or a methyl group, are copolymerised.

**6.** Process according to one of claims 1 to 4 characterised in that monomer units of the formula 1a

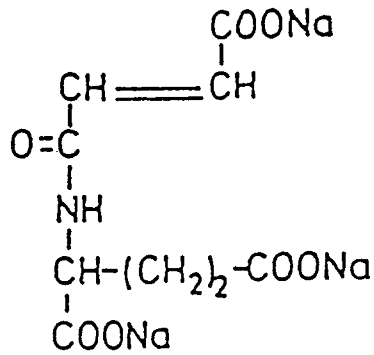

(1a)

and monomer units of the formula IIIb

(IIIb)

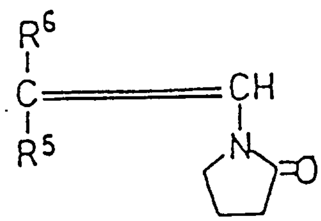

in which $R^5$ and $R^6$ independently of one another represent hydrogen or a methyl group, are copolymerised.

**7.** Process according to one of claims 1 to 3 characterised in that $R^1$ = H and

$R^2$ = 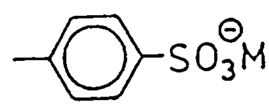

and M is defined in claim 1.

**8.** Process according to one of claims 1 to 3 or 7 characterised in that monomer units of the formula Ib

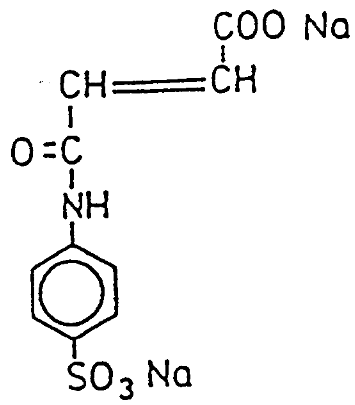

(Ib)

and monomer units of the formula IIIa

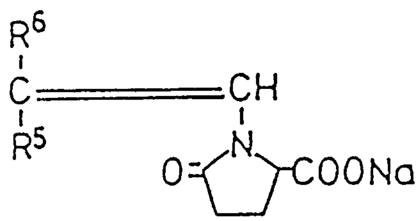

(IIIa)

in which $R^5$ and $R^6$ independently of one another represent hydrogen or a methyl group, are copolymerised.

**9.** Process according to one of claims 1 to 3 or 7 characterised in that monomer units of the formula Ib

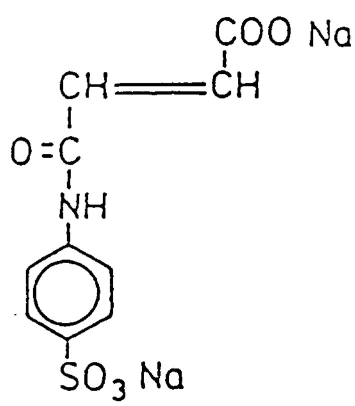

(Ib)

and monomer units of the formula IIIb

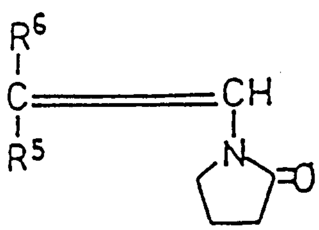

(IIIb)

in which $R^5$ and $R^6$ independently of one another represent hydrogen or a methyl group, are copolymerised.

**10.** Process according to one of claims 1 to 3 or 7 characterised in that monomer units of the formula Ib

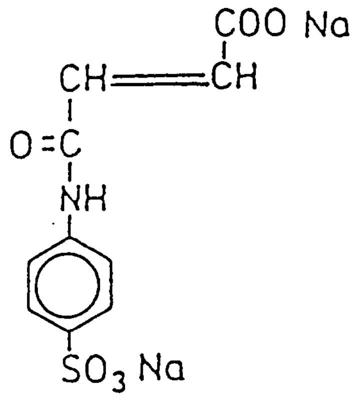

. (Ib)

and monomer units of the formula IIIc

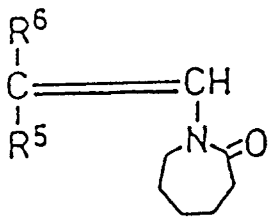

(IIIc)

in which $R^5$ and $R^6$ independently of one another represent hydrogen or a methyl group, are copolymerised.

**11.** Process according to one of claims 1 to 3 characterised in that monomer units of the formula Ic

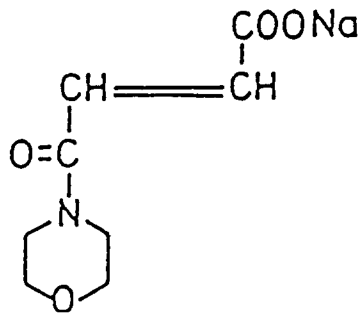

(Ic)

and monomer units of the formula IIIb

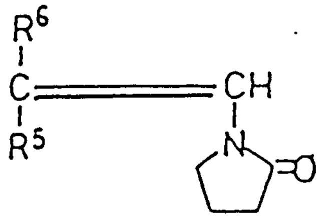

(IIIb)

in which $R^5$ and $R^6$ independently of one another represent hydrogen or a methyl group, are copolymerised.

**12.** Process according to one of claims 1 to 11 characterised in that the reaction is carried out at temperatures of 20 to 75 ° C.

**13.** Process according to one of claims 1 to 12 characterised in that 50 mol % of a monomer of the general formula I is combined with 50% of a monomer of the general formula III.

**14.** Process according to one of claims 1 to 13 characterised in that as a monomer of the general formula I the sodium salt is employed.

**15.** Process according to one of claims 1 to 14 characterised in that water and/or an alcohol, e.g. isopropanol, is used as the solvent.

**16.** Process according to one of claims 1 to 15 characterised in that hydrogen peroxide or sodium peroxide is employed as the catalyst.

**17.** Process according to one of claims 1 to 16 characterised in that it is performed at pH values of from 4.5 to 7.0

**18.** Process according to one of claims 1 to 17 characterised in that it is performed in an open atmosphere.

**19.** The use of the copolymers produced in accordance with the invention according to one of claims 1 to 18 as a dispersant for solids in water containing compositions.

**20.** Use according to claim 19 characterised in that the copolymers are employed in the form of their aqueous solutions with a content of 0.01 to 60 % by weight, preferably 0.01 to 5 % by weight.

**21.** Use according to one of claims 19 or 20 characterised in that the said composition contains at least one inorganic hydraulic binder and additives, and possibly at least one component selected from the group comprising air pore formers, concrete fluidisers, high-strength concrete fluidisers, mortar fluidisers, setting accelerators and setting retarders.

**Revendications**

**Revendications pour les Etats contractants suivants : AT, BE, CH, DE, DK, FR, GB, IT, LI, LU, NL, SE**

**1.** Copolymère linéaire, soluble dans l'eau, constitué d'unités structurales partielles de la formule A

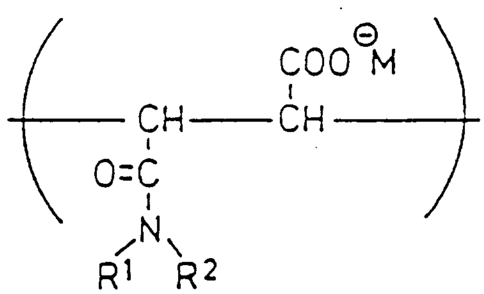

(A)

et/ou

d'unités structurales partielles de la formule B

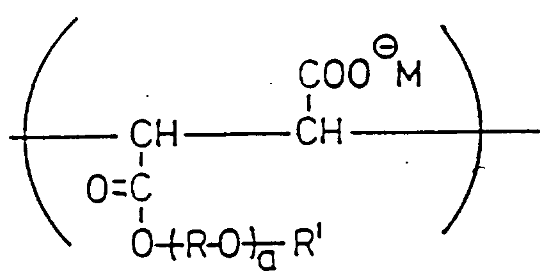

(B)

et

d'unités structurales partielles de la formule C

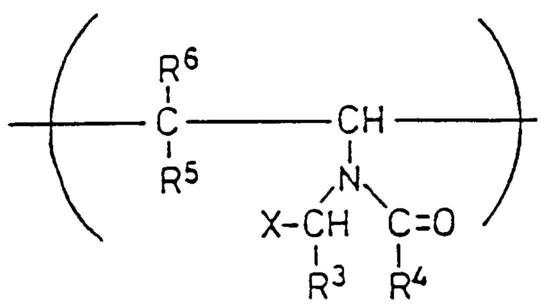

(C)

formules dans lesquelles

$R^1$ et $R^2$ représentent, chacun indépendamment l'un de l' autre, un atome d'hydrogène, un radical carboxylate de métal alcalin ou carboxylate de métal alcalino-terreux présentant un radical alkyle en $C_1$ à $C_{20}$, un groupe cycloaliphatique, aliphatique, ou aromatique, présentant éventuellement un radical acide sulfonique ou un radical sulfonate de métal alcalin ou sulfonate de métal alcalino-terreux, un groupe hydroxyalkyle, de préférence un radical hydroxyéthyle ou hydroxypropyle, ou représentent ensemble, y compris l'atome d'azote auquel ils sont attachés, un noyau morpholine,

M représente un ion hydrogène, un ion de métal monovalent ou divalent, ou un groupe ammonium, éventuellement substitué,

R représente un groupe alkylène qui comporte de 2 à 4 atomes de carbone,

R' représente un atome d'hydrogène ou un radical alkyle comportant de 1 à 4 atomes de carbone,

a représente un nombre dont la valeur varie de 1 à 100, $R^3$ et $R^4$ représentent, chacun indépendam-

ment l'un de l'autre, un atome d'hydrogène, un radical alkyle en $C_1$ à $C_{12}$, un radical phényle, ou forment ensemble un radical di-, tri- ou tétraméthylène, qui forme, par incorporation du reste de la formule

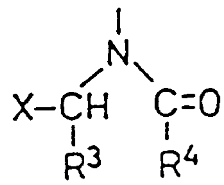

un noyau à cinq, six ou sept chaînons,
$R^5$ et $R^6$ représentent, chacun indépendamment l'un de l'autre, un atome d'hydrogène, un radical alkyle en $C_1$ à $C_{12}$, ou un radical phényle et
X représente un atome d'hydrogène, un radical alkyle en $C_1$ à $C_4$, un radical acide carboxylique ou carboxylate de métal alcalin,
avec la condition que, dans un copolymère qui contient des unités structurales partielles exclusivement dérivées de la formule B et répondant à la formule $\overline{B}$

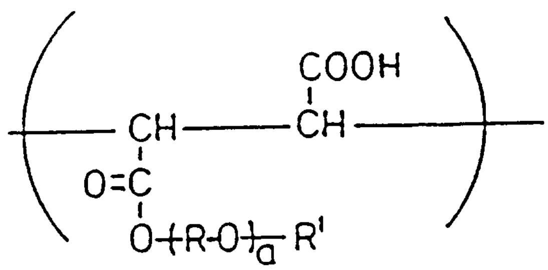 $(\overline{B})$

et des unités structurales partielles de la formule C, les restes $R^3$ et $R^4$ ensemble ne peuvent former un groupe diméthylène, ni un groupe tri- ou tétraméthylène, dans la mesure où $R^5 = R^6 =$ hydrogène et A est supérieur à 1.

**2.** Copolymère suivant la revendication 1, caractérisé en ce que sont présentes
r unités structurales partielles, de préférence 3 à 1000 unités structurales partielles, répondant à la formule C,
et
p unités structurales partielles, de préférence 3 à 1000 unités structurales partielles, où $p \leq r$, répondant à la formule (A)
ou
q unités structurales partielles, de préférence 3 à 1000 unités structurales partielles, $q \leq r$, répondant à la formule (B).

**3.** Copolymère suivant la revendication 2, caractérisé en ce que, dans un copolymère constitué d'unités structurales partielles de la formule (A) et d'unités structurales partielles de la formule (C), celles-ci sont liées les unes aux autres en alternance.

**4.** Copolymère suivant l'une quelconque des revendications 1 à 3, caractérisé en ce que

$R^1 =$ H et

$R^2$ = 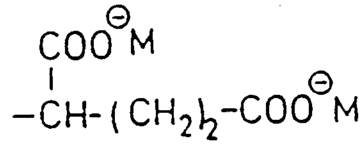

et m est tel que défini dans la revendication 1.

**5.** Copolymère suivant l'une quelconque des revendications 1 à 4, caractérisé en ce qu'il est constitué des unités structurales partielles de la formule I

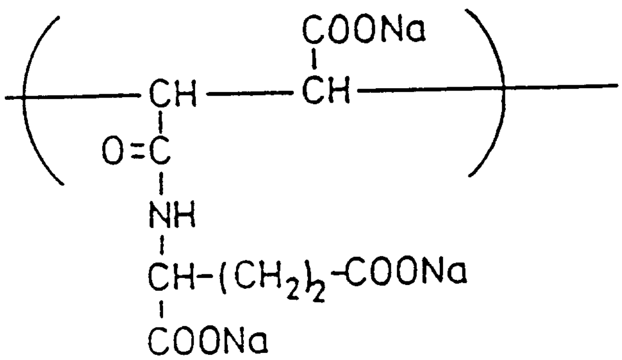

(1)

et des unités structurales partielles de la formule 2

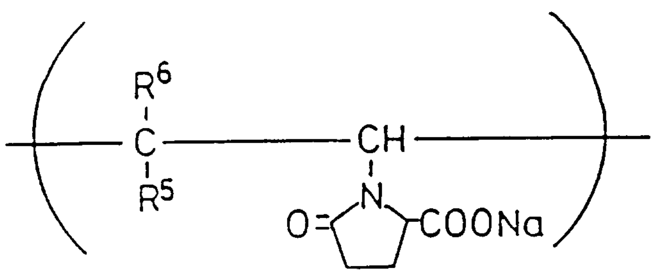

(2)

dans laquelle $R^5$ et $R^6$ représentent, indépendamment l'un de l'autre, un atome d'hydrogène ou le radical méthyle.

**6.** Copolymère suivant l'une quelconque des revendications 1 à 4, caractérisé en ce qu'il est constitué des unités structurales partielles de la formule 1

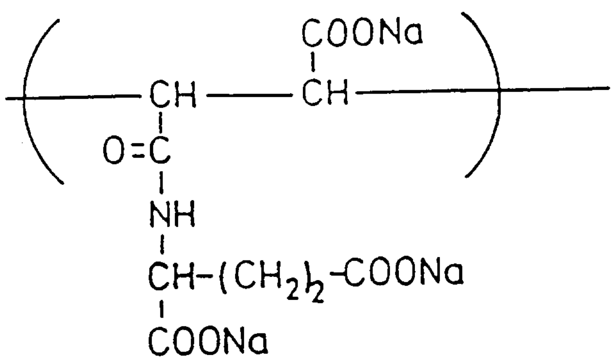

(1)

et des unités structurales partielles de la formule 3

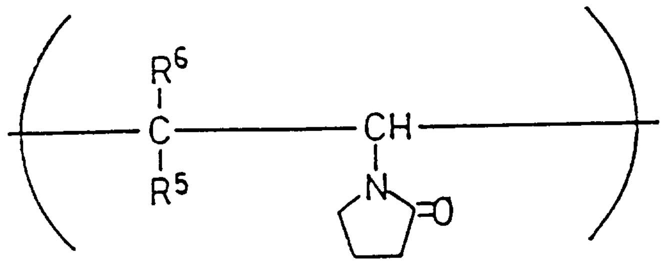

(3)

dans laquelle $R^5$ et $R^6$ représentent, chacun indépendamment l'un de l'autre, un atome d'hydrogène ou le radical méthyle.

**7.** Copolymère suivant l'une quelconque des revendications 1 à 3, caractérisé en ce que

$R^1$ = H et

$R^2$ = 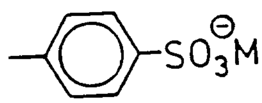

et
M est tel que défini dans la revendication 1.

**8.** Copolymère suivant l'une quelconque des revendications 1 à 3 et 7, caractérisé en ce qu'il est constitué des unités structurales partielles de la formule 4

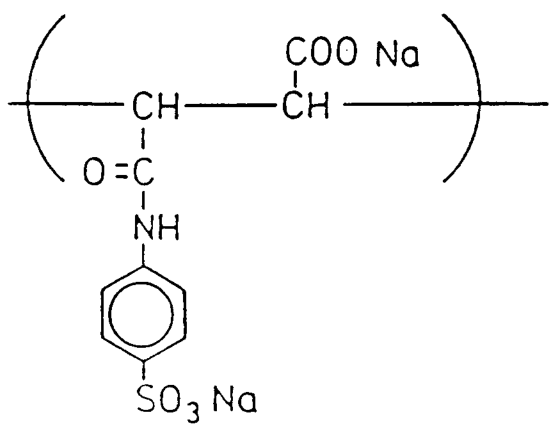

(4)

et des unités structurales partielles de la formule 2

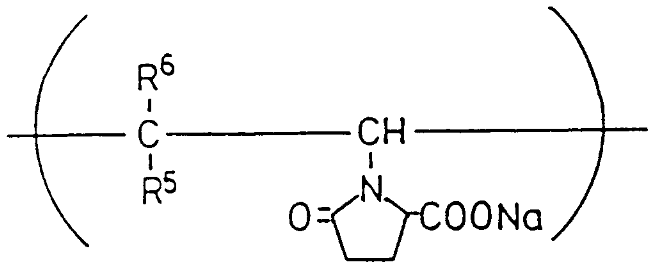

(2)

dans laquelle $R^5$ et $R^6$ représentent, chacun indépendamment l'un de l'autre, un atome d'hydrogène ou le radical méthyle.

**9.** Copolymère suivant l'une quelconque des revendications 1 à 3 et 7, caractérisé en ce qu'il est constitué des unités structurales partielles de la formule 4

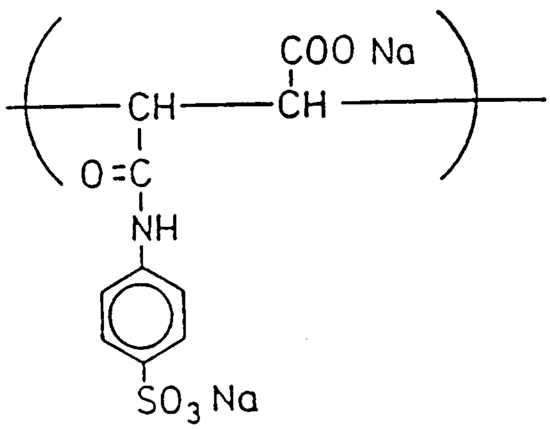

(4)

et des unités structurales partielles de la formule 3

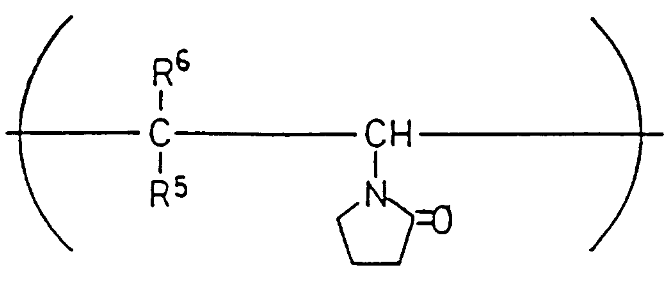

(3)

dans laquelle $R^5$ et $R^6$ représentent, chacun indépendamment l'un de l'autre, un atome d'hydrogène ou le radical méthyle.

**10.** Copolymère suivant l'une quelconque des revendications 1 à 3 et 7, caractérisé en ce qu'il est constitué des unités structurales partielles de la formule 4

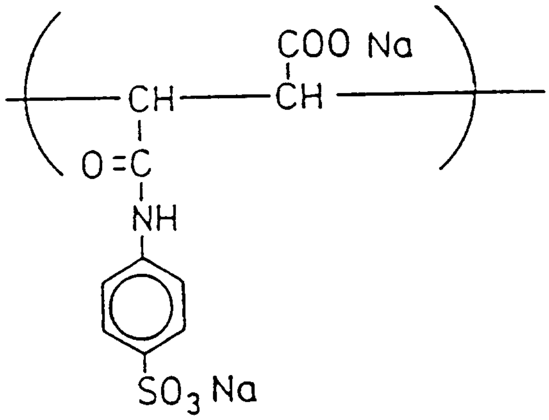

(4)

et des unités structurales partielles de la formule 5

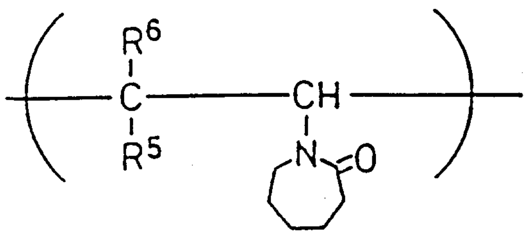

(5)

dans laquelle $R^5$ et $R^6$ représentent, chacun indépendamment l'un de l'autre, un atome d'hydrogène ou le radical méthyle.

**11.** Copolymère suivant l'une quelconque des revendications 1 à 3, caractérisé en ce qu'il est constitué des unités structurales partielles de la formule 6

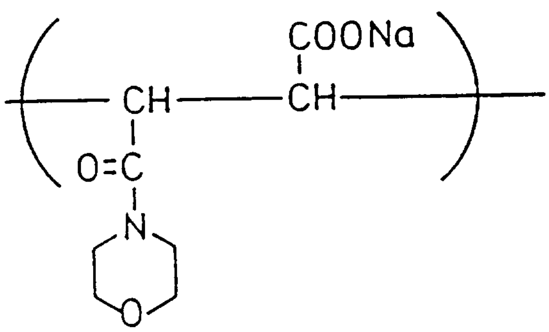

(6)

et des unités structurales partielles de la formule 3

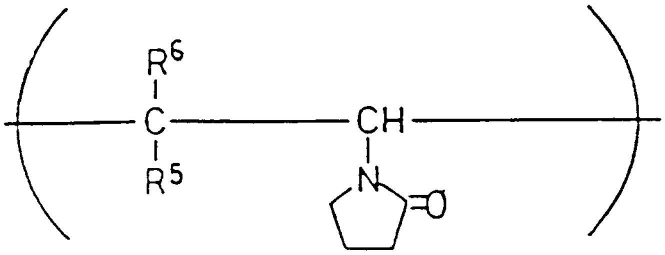

(3)

dans laquelle $R^5$ et $R^6$ représentent, indépendamment l'un de l'autre, un atome d'hydrogène ou le radical méthyle.

**12.** Procédé de préparation de copolymères suivant l'une quelconque des revendications 1 à 11, qui se caractérise par la copolymérisation radicalaire de

a) 0 à 60% molaires d'un monomère de la formule générale 7

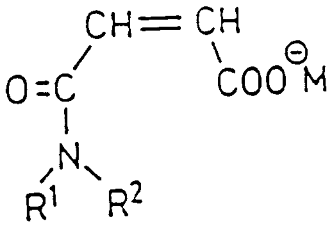

(7)

dans laquelle $R^1$, $R^2$ et M possèdent les significations qui leur ont été attribuées dans la revendication 1, et où

b) 0 à 60% molaires d'un monomère de la formule générale 8

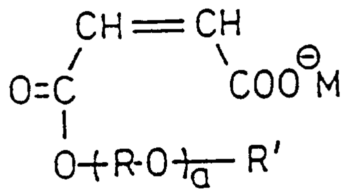

(8)

dans laquelle R, R', M et a possèdent les significations qui leur ont été attribuées dans la revendication 1, avec

c) 40 à 60% molaires d'un monomère de la formule générale 9

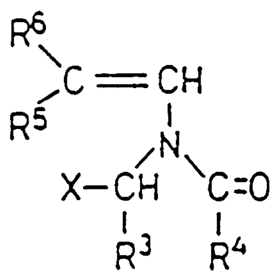

(9)

dans laquelle $R^3$, $R^4$, $R^5$, $R^6$ et X possèdent les significations qui leur ont été attribuées dans la revendication 1,

et la sommes de a) à c) est toujours égales à 100% molaires, dans un solvant, en recourant à l'emploi d'au moins un catalyseur de polymérisation, d'au moins un régulateur de la longueur des chaînes, de préférence, à des températures de 20 à 100 °C, plus particulièrement de 20 à 75 °C.

**13.** Procédé suivant la revendication 12, caractérisé en ce que l'on fait réagir 50% molaires d'un monomère de la formule générale 7 avec 50% molaires d'un monomère de la formule générale 9.

**14.** Procédé suivant l'une quelconque des revendications 12 et 13, caractérisé en ce que, à titre de monomères de la formule générale 7, on utilise leurs sels de sodium.

**15.** Procédé suivant l'une quelconque des revendications 12 à 14, caractérisé en ce que, à titre de solvant, on utilise de l'eau et/ou un alcool, par exemple l'isopropanol.

**16.** Procédé suivant l'une quelconque des revendications 12 à 15, caractérisé en ce que, à titre de catalyseur, on utilise du peroxyde d'hydrogène ou du peroxyde de sodium.

**17.** Procédé suivant l'une quelconque des revendications 12 à 16, caractérisé en ce que l'on travaille à des valeurs de pH de 4,5 à 7,0.

**18.** Procédé suivant l'une quelconque des revendications 12 à 17, caractérisé en ce que l'on travaille dans une atmosphère ouverte.

**19.** Utilisation des copolymères suivant l'une quelconque des revendications 1 à 11, à titre d'agent dispersif de substances solides dans des compositions qui contiennent de l'eau.

**20.** Utilisation suivant la revendication 19, caractérisée en ce que l'on met les copolymères en oeuvre sous la forme de leurs solutions aqueuses d'une teneur de 0,01 à 60% en poids, de préférence 0,01 à 5% en poids.

**21.** Utilisation suivant l'une quelconque des revendications 19 à 20, caractérisée en ce que la composition précitée contient au moins un liant hydraulique, inorganique et des additifs ou granulats, comme éventuellement aussi au moins un constituant choisi dans le groupe formé par les agents formant des pores d'air, des fluidifiants du béton, des fluidifiants du béton à haut rendement ou haute résistance, des fluidifiants du mortier, des accélérateurs de prise et des retardateurs de prise.

**Revendications pour l'Etat contractant suivant : ES**

**1.** Procédé de préparation de copolymères solubles dans l'eau, constitués d'unités structurales partielles de la formule A

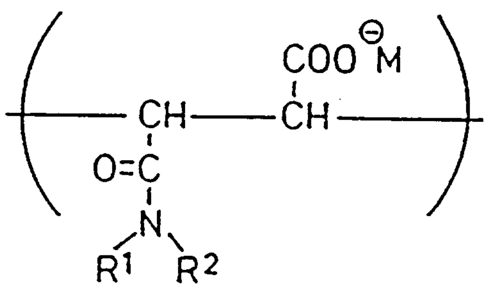

(A)

et/ou

d'unités structurales partielles de la formule B

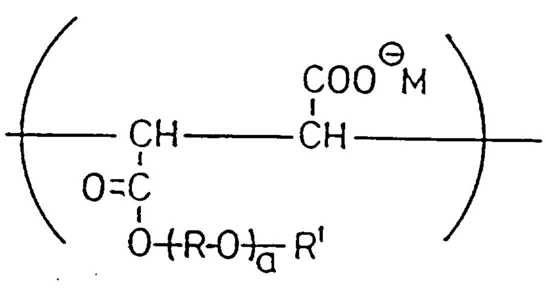

(B)

et

d'unités structurales partielles de la formule C

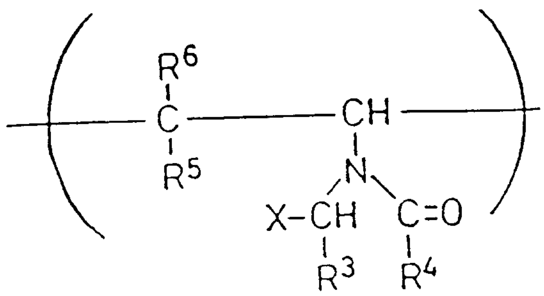

(C)

formules dans lesquelles

$R^1$ et $R^2$ représentent, chacun indépendamment l'un de l' autre, un atome d'hydrogène, un radical carboxylate de métal alcalin ou carboxylate de métal alcalino-terreux présentant un radical alkyle en $C_1$ à $C_{20}$, un groupe cycloaliphatique, aliphatique, ou aromatique, présentant éventuellement un radical acide sulfonique ou un radical sulfonate de métal alcalin ou sulfonate de métal alcalino-terreux, un groupe hydroxyalkyle, de préférence un radical hydroxyéthyle ou hydroxypropyle, ou représentent ensemble, y compris l'atome d'azote auquel ils sont attachés, un noyau morpholine,

M représente un ion hydrogène, un ion de métal monovalent ou divalent, ou un groupe ammonium, éventuellement substitué,

R représente un groupe alkylène qui comporte de 2 à 4 atomes de carbone,

R' représente un atome d'hydrogène ou un radical alkyle comportant de 1 à 4 atomes de carbone,

a représente un nombre dont la valeur varie de 1 à 100,

$R^3$ et $R^4$ représentent, chacun indépendamment l'un de l'autre, un atome d'hydrogène, un radical alkyle en $C_1$ à $C_{12}$, un radical phényle, ou forment ensemble un radical di-, tri- ou tétraméthylène, qui forme, par incorporation du reste de la formule

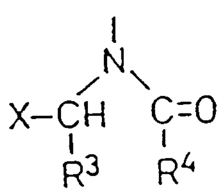

un noyau à cinq, six ou sept chaînons,

$R^5$ et $R^6$ représentent, chacun indépendamment l'un de l'autre, un atome d'hydrogène, un radical alkyle en $C_1$ à $C_{12}$, ou un radical phényle et

X représente un atome d'hydrogène, un radical alkyle en $C_1$ à $C_4$, un radical acide carboxylique ou carboxylate de métal alcalin,

avec la condition que, dans un copolymère qui contient des unités structurales partielles exclusivement dérivées de la formule B et répondant à la formule $\overline{B}$

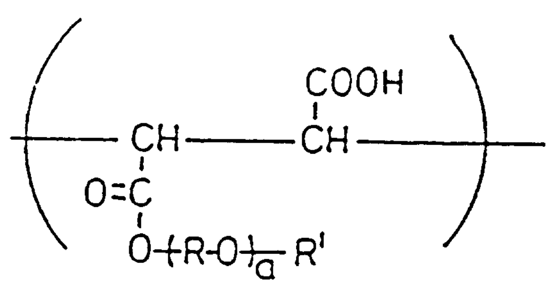

($\overline{B}$)

et des unités structurales partielles de la formule C, les restes $R^3$ et $R^4$ ensemble ne peuvent former un groupe diméthylène, ni un groupe tri- ou tétraméthylène, dans la mesure où $R^5$ = $R^6$ = hydrogène et A est supérieur à 1, qui se caractérise par la copolymérisation radicalaire de

a) 0 à 60% molaires d'un monomère de la formule générale I

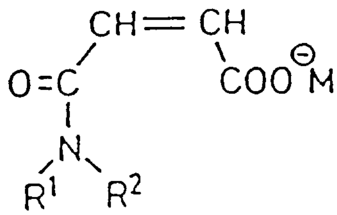

(I)

dans laquelle $R^1$, $R^2$ et M possèdent les significations qui leur ont été attribuées dans la revendication 1, et où

b) 0 à 60% molaires d'un monomère de la formule générale II

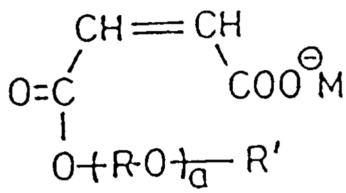

(II)

dans laquelle R, R', M et a possèdent les significations qui leur ont été attribuées dans la revendication 1, avec

c) 40 à 60% molaires d'un monomère de la formule générale III

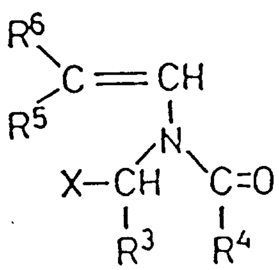

(III)

dans laquelle $R^3$, $R^4$, $R^5$, $R^6$ et X possèdent les significations qui leur ont été attribuées dans la revendication 1,

et la sommes de a) à c) est toujours égales à 100% molaires, dans un solvant, en recourant à l'emploi d'au moins un catalyseur de polymérisation, d'au moins un régulateur de la longueur des chaînes, de préférence, a des températures de 20 à 100 °C .

**2.** Procédé suivant la revendication 1, caractérisé en ce que l'on prépare un copolymère dans lequel sont présentes

r unités structurales partielles, de préférence 3 à 1000 unités structurales partielles, répondant à la formule C,

et

p unités structurales partielles, de préférence 3 à 1000 unités structurales partielles, où p ≦ r, répondant à la formule (A)

ou

q unités structurales partielles, de préférence 3 à 1000 unités structurales partielles, q ≦ r, répondant à la formule (B).

**3.** Procédé suivant la revendication 2, caractérisé en ce que l'on prépare un copolymère dans lequel les unités structurales partielles de la formule (A) et d'unités structurales partielles de la formule (C) sont

liées les unes aux autres en alternance.

**4.** Procédé suivant l'une quelconque des revendications 1 à 3, caractérisé en ce que

$R^1$ = H et

$R^2$ =

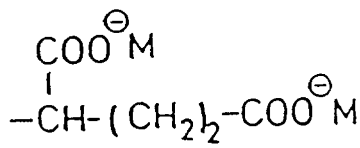

et m est tel que défini dans la revendication 1.

**5.** Procédé suivant l'une quelconque des revendications 1 à 4, caractérisé en ce que l'on copolymérise des unités monomériques de la formule Ia

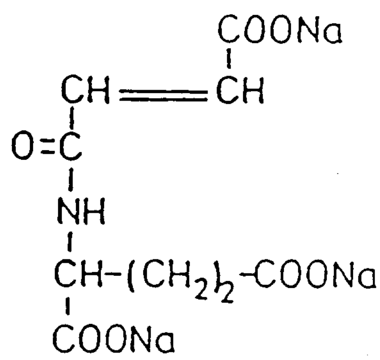

(Ia)

et des unités monomériques de la formule IIIa

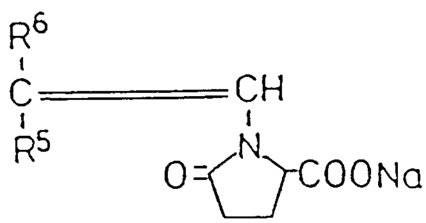

(IIIa)

dans laquelle $R^5$ et $R^6$ représentent, chacun indépendamment l'un de l'autre, un atome d'hydrogène ou le radical méthyle.

**6.** Procédé suivant l'une quelconque des revendications 1 à 4, caractérisé en ce que l'on copolymérise des unités monomériques de la formule Ia

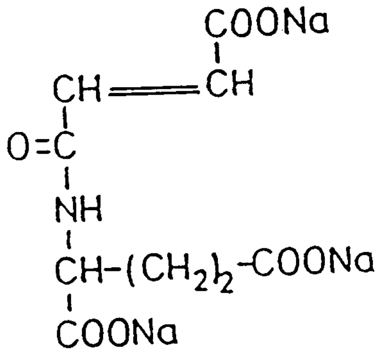

(Ia)

et des unités monomériques de la formule IIIb

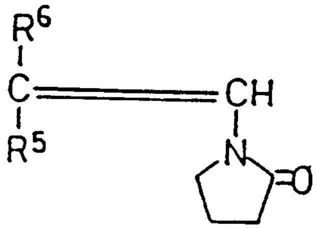

(IIIb)

dans laquelle $R^5$ et $R^6$ représentent, chacun indépendamment l'un de l'autre, un atome d'hydrogène ou le radical méthyle.

7. Procédé suivant l'une quelconque des revendications 1 à 3, caractérisé en ce que

$R^1$ = H et

$R^2$ = 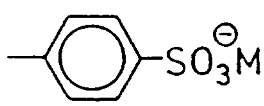

et
M est tel que défini dans la revendication 1.

8. Procédé suivant l'une quelconque des revendications 1 à 3 ou 7, caractérisé en ce que l'on copolymérise des unités monomériques de la formule Ib

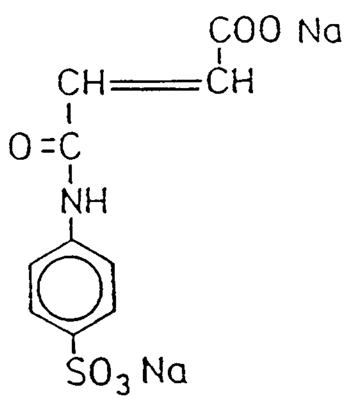

(Ib)

et des unités monomériques de la formule IIIa

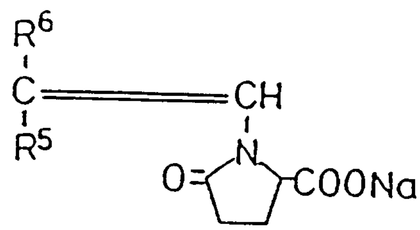

(IIIa)

dans laquelle $R^5$ et $R^6$ représentent, chacun indépendamment l'un de l'autre, un atome d'hydrogène ou le radical méthyle.

**9.** Procédé suivant l'une quelconque des revendications 1 à 3 ou 7, caractérisé en ce que l'on copolymérise des unités monomériques de la formule Ib

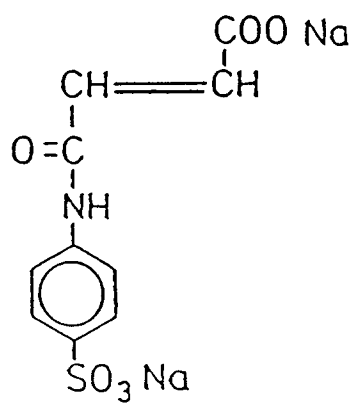

(Ib)

et des unités monomériques de la formule IIIb

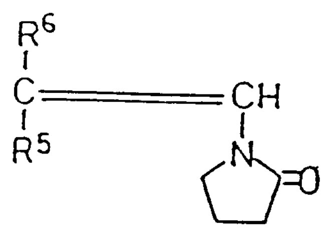

(IIIb)

dans laquelle $R^5$ et $R^6$ représentent, chacun indépendamment l'un de l'autre, un atome d'hydrogène ou le radical méthyle.

**10.** Procédé suivant l'une quelconque des revendications 1 à 3 ou 7, caractérisé en ce que l'on copolymérise des unités monomériques de la formule Ib

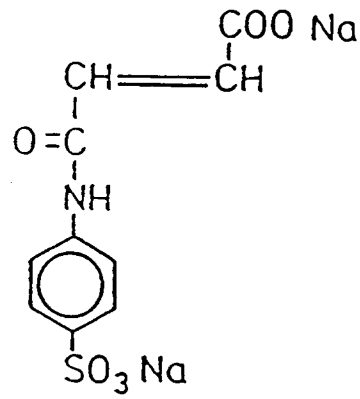

(Ib)

et des unités monomériques de la formule IIIc

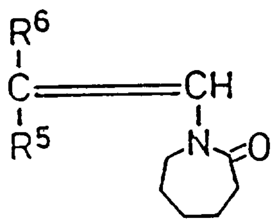

(IIIc)

dans laquelle $R^5$ et $R^6$ représentent, chacun indépendamment l'un de l'autre, un atome d'hydrogène ou le radical méthyle.

**11.** Procédé suivant l'une quelconque des revendications 1 à 3, caractérisé en ce que l'on copolymérise des unités monomériques de la formule Ic

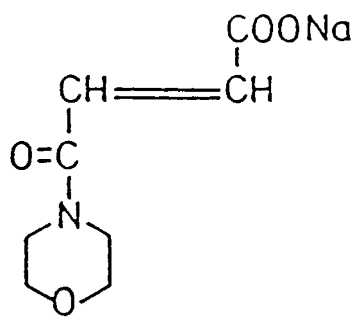

(Ic)

et des unités monomériques de la formule IIIb

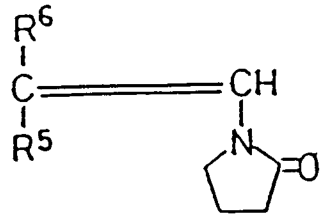

(IIIb)

dans laquelle $R^5$ et $R^6$ représentent, indépendamment l'un de l'autre, un atome d'hydrogène ou le

radical méthyle.

**12.** Procédé suivant l'une quelconque des revendications 1 à 11, caractérisé en ce que l'on entreprend la réaction à des températures de 20 à 75 °C.

**13.** Procédé suivant l'une quelconque des revendications 1 à 12, caractérisé en ce que l'on fait réagir 50% molaires d'un monomère de la formule générale I avec 50% molaires d'un monomères de la formule générale III.

**14.** Procédé suivant l'une quelconque des revendications 1 à 13, caractérisé en ce que, à titre de monomères de la formule générale I, on utilise leurs sels de sodium.

**15.** Procédé suivant l'une quelconque des revendications 1 à 14, caractérisé en ce que l'on utilise, à titre de solvant, de l'eau et/ou un alcool, par exemple l'isopropanol.

**16.** Procédé suivant l'une quelconque des revendications 1 à 15, caractérisé en ce que, à titre de catalyseur, on utilise le peroxyde d'hydrogène ou le peroxyde de sodium.

**17.** Procédé suivant l'une quelconque des revendications 1 à 16, caractérisé en ce que l'on travaille à des valeurs de pH de 4,5 à 7,0.

**18.** Procédé suivant l'une quelconque des revendications 1 à 17, caractérisé en ce que l'on travaille dans une atmosphère ouverte.

**19.** Utilisation des copolymères suivant l'une quelconque des revendications 1 à 11, à titre d'agent dispersif de substances solides dans des compositions qui contiennent de l'eau.

**20.** Utilisation suivant la revendication 19, caractérisée en ce que l'on met les copolymères en oeuvre sous la forme de leurs solutions aqueuses d'une teneur de 0,01 à 60% en poids, de préférence 0,01 à 5% en poids.

**21.** Utilisation suivant l'une quelconque des revendications 19 à 20, caractérisée en ce que la composition précitée contient au moins un liant hydraulique, inorganique et des additifs ou granulats, comme éventuellement aussi au moins un constituant choisi dans le groupe formé par les agents formant des pores d'air, des fluidifiants du béton, des fluidifiants du béton à haut rendement ou haute résistance, des fluidifiants du mortier, des accélérateurs de prise et des retardateurs de prise.